# EUROPÄISCHE PATENTANMELDUNG

(11) **EP 2 263 893 A1**
(43) Veröffentlichungstag der Anmeldung: **22.12.2010**
(21) Anmeldenummer: 09162465.0
(22) Anmeldetag: 10.06.2009
(51) Int. Cl.: B60G 17/052

(54) **Schaltventileinheit zum Be- und Entlüften von Federbälgen eines Fahrzeugs oder Anhängers**

(71) Anmelder: Haldex Brake Products GmbH, 69123 Heidelberg (DE)
(72) Erfinder: Becke, Stefan, 68804 Altlussheim (DE); Tschöke, Tobias, 69121 Heidelberg (DE); Nöcker, Joachim, 69412 Eberbach (DE)
(74) Vertreter: Rehberg Hüppe + Partner

(57) **Zusammenfassung**

Die Erfindung betrifft eine Schaltventileinheit (17) zum Be- und Entlüften von Luftfederbälgen (2) zum Heben und Senken eines Aufbaus eines Fahrzeugs oder Anhängers. Erfindungsgemäß ist eine manuelle Betätigungseinrichtung (11) vorgesehen, die mechanisch mit der Ventilbaugruppe (4) gekoppelt ist, so dass durch manuelle Betätigung der Betätigungseinrichtung (11) die Ventilbaugruppe (4) in die Stellung Heben, Senken und/oder Stopp überführbar ist.

Erfindungsgemäß verfügt die manuelle Betätigungseinrichtung (11) über eine manuell um eine Schwenkachse verschwenkbare Kurvenscheibe (64). Die Kurvenscheibe (64) besitzt eine Kurvenfläche (65) mit einer Betätigungskontur. Die Betätigungskontur betätigt Stößel (39), die translatorisch und parallel zur Schwenkachse der Kurvenscheibe (64) geführt sind. Über die Stößel können Ventile (20, 21) der Ventilbaugruppe (4) betätigt werden.

## Beschreibung

### TECHNISCHES GEBIET DER ERFINDUNG

Die vorliegende Erfindung betrifft eine Schaltventileinheit, die Einsatz findet zum Be- und Entlüften von Federbälgen zum Heben und Senken eines Aufbaus eines Fahrzeugs oder Anhängers gemäß dem Oberbegriff des Patentanspruchs 1.

### STAND DER TECHNIK

Insbesondere für Nutzfahrzeuge ist eine manuelle Anpassung oder Veränderung der Niveauhöhe eines Aufbaus des Fahrzeugs oder Anhängers erforderlich, beispielsweise für eine Anpassung des Fahrzeugs oder Anhängers zum Be- oder Entladen an einer Rampe. Hierzu ist es aus dem Stand der Technik bekannt, Hebe-Senk-Ventile einzusetzen, die
- in einer Stellung Heben Luftfederbälge des Fahrzeugs oder Anhängers mit einer Druckluftquelle verbinden,
- in einer Stellung Senken die Luftfederbälge mit einer Drucksenke oder Entlüftung verbinden sowie
- eine Stellung Stopp aufweisen, in welcher eine Leitungsverbindung zu den Luftfederbälgen abgesperrt ist, so dass der pneumatische Zustand der Luftfederbälge möglichst konserviert wird.

Während ein manuelles Heben und Senken über die Schaltventileinheit lediglich bei ruhendem Fahrzeug oder Anhänger stattfindet, soll während der Fahrt des Fahrzeugs oder Anhängers, in welcher sich vorzugsweise das genannte Hebe-Senk-Ventil in einer zusätzlichen Stellung Fahrt befindet, eine Steuerung oder Regelung der Höhe des Aufbaus derart erfolgen, dass ein Sollniveau der Höhe aufrechterhalten wird. Hierzu finden üblicherweise sogenannte Niveauregelventile Einsatz, welche dem Hebe-Senk-Ventil, welches in der Stellung Fahrt vorzugsweise eine Durchlassstellung von einem Druckluftvorrat zu den Luftfederbälgen einnimmt, vor- oder nachgeschaltet sein können.

DE 26 23 235 C3 offenbart eine Schaltventileinheit mit einem zwischen Stellungen Fahrt, Stopp und Senken verschwenkbaren Wählhebel, wobei mit dem Wählhebel eine Schaltwelle verdreht wird. Die Schaltwelle trägt nockenartige Steuerscheiben, die über quer zur Längsachse der Schaltwelle orientierte Stößel Ventile betätigen, über welche das Be- und Entlüften der Luftfederbälge erfolgt. Über eine Verriegelungseinrichtung kann eine Verriegelung des Wählhebels mit der Schaltwelle in vorgegebenen Winkelstellungen erfolgen, wobei eine Bewegung aus diesen verriegelten Stellungen lediglich durch manuelle Applikation von Kräften durch den Benutzer auf den Wählhebel erfolgen kann.

Aus den Patenten DE 41 20 824 C1 sowie DE 42 02 729 C2 ist eine Schaltventileinheit bekannt, bei welcher ein Wählhebel mit Schaltwelle verschwenkbar ist zwischen den Stellungen Heben, Stopp und Senken, wobei über eine Federanordnung eine automatische Rückführung aus den Stellungen Heben bzw. Senken in die Stellung Stopp erfolgen kann, wenn der Fahrer den Wählhebel in der Stellung Heben oder Senken loslässt. Zur Betätigung der Ein- und Auslassventile der Schaltventileinheit in den Stellungen Heben und Senken besitzt die Schaltwelle nockenartige Steuerscheiben, die quer zur Längsachse der Schaltwelle orientierte Stößel betätigen, die wiederum die Ventile betätigen. Darüber hinaus ist der Wählhebel mit Schaltwelle aus der Schwenkebene Heben, Stopp und Senken axial und translatorisch verschieblich in eine Stellung Fahrt, in welcher eine Verschwenkung der Schaltwelle mit Wählhebel unterbunden ist durch Eintritt eines Querfortsatzes der Schaltwelle zwischen Anschlägen eines Gehäuses. Während somit eine Verschwenkung des Wählhebels in der Axialstellung Fahrt nicht möglich ist, ist in der Stellung Fahrt über die Schaltventileinheit ein Druckluftvorrat unter Zwischenschaltung eines Niveauregelventils mit den Luftfederbälgen verbunden, so dass während des Fahrbetriebs eine Niveauregelung erfolgen kann. Um zu vermeiden, dass ein Vergessen einer Rückstellung von Wählhebel und Schaltwelle in die Stellung Fahrt dazu führt, dass keine Niveauregelung im Fahrbetrieb erfolgt, schlagen die Patente vor, eine pneumatische Rückführung der Schaltwelle in die Stellung Fahrt, veranlasst durch eine elektronische Steuereinrichtung, durchzuführen. Hierbei kann die Steuereinrichtung beispielsweise eine Fahrgeschwindigkeit überwachen und bei Überschreiten eines Schwellwerts der Fahrgeschwindigkeit die automatische Rückführung der Schaltwelle in die Stellung Fahrt veranlassen. Möglich ist auch, dass eine Ansteuerung auf Grundlage von ohnehin in einer ABS-Anlage vorliegenden Betriebsgrößen erfolgt. Alternativ kann das Signal eines Raddrehzahlsensors, eines Bremslichtschalters, ein Schließen der Zündung, eine Gangwahlerkennung oder Ähnliches sein, auf dessen Grundlage eine Erkennung eines erfolgten oder bevorstehenden Fahrbetriebs erfolgt. Vorzugsweise erfolgt die automatische axiale Rückführung der Schaltwelle in die Stellung Fahrt durch pneumatische Beaufschlagung einer Stirnfläche der Schaltwelle, die über ein von einer Steuereinheit oder der ABS-Steuereinheit angesteuertes Magnetventil gesteuert wird.

DE 198 21 305 A1 beschreibt eine Schaltventileinheit, welche ausschließlich über elektrische Signale gesteuert wird, die entweder automatisiert in einer Steuereinheit erzeugt werden oder über einen Schalter oder Taster, der innerhalb einer Fahrerkabine oder außerhalb derselben angeordnet ist und Stellungen Heben und Senken besitzt, erzeugt werden. Besondere Regelalgorithmen betreffen den Druckluft- und Regelbedarf bei einer Schiefstellung des Aufbaus oder einer Nickbewegung des Aufbaus bei Bremsvorgängen und einen Rangierbetrieb, das Anlernen eines Fahrzeugniveaus sowie die Berücksichtigung eines Verspannens des Fahrzeugsaufbaus bei einem Bremsbetrieb. Die die Belüftung und Entlüftung durchführenden Ventile der Schaltventileinheit werden hierbei sowohl für ein Heben und Senken bei manueller Betätigung des Tasters als auch für die Niveauregelung auf Grundlage der automatisierten Ansteuerung durch die Steuereinheit genutzt.

Patent DE 199 13 380 C1 offenbart eine axial verschiebliche Schaltwelle, die Schwenkstellungen Heben, Senken sowie Stopp sowie Axialstellungen Stopp und Fahrt besitzt. Eine Verriegelung der Schaltwelle in den Axialstellungen Stopp und Fahrt erfolgt über axial beabstandete Rastnuten der Schaltwelle, in welche in der verriegelten Stellung eine Rastkugel eingreift, welche unter Zwischenschaltung einer Feder an einem Kolben abgestützt ist, welcher nach Maßgabe eines elektrischen Steuersignals und unter Verwendung eines Magnetventils pneumatisch beaufschlagbar ist.

Das Patent DE 199 16 040 B4 schlägt zunächst den Einsatz einer elektrisch ansteuerbaren Betätigungseinheit vor, in welcher jeweils ein elektrisch angesteuertes Sperrventil einem Kreis einer zweikreisigen Luftfederanlage vorgeschaltet ist. Ein Anschluss dieser beiden Sperrventile ist mit einem elektrisch ansteuerbaren 3/2-Wege-Ventil verbunden. In der Öffnungsstellung der Sperrventile kann je nach Stellung des 3/2-Wege-Ventils eine Belüftung der Luftfederbälge oder eine Entlüftung der Luftfederbälge bei rein elektrischer Ansteuerung erfolgen. Um auch bei abgekoppeltem Anhänger und ohne elektrische Leistungsversorgung die Luftfederung funktionsfähig zu halten, ist der ersten elektrisch angesteuerten Schaltventileinheit eine manuelle Schaltventileinheit vorgeordnet. Die manuelle Schaltventileinheit besitzt ein rein manuell betätigbares Sperrventil, hier ein 6/2-Wege-Ventil. Diesem vorgeschaltet sind manuell betätigbare 3/2-Wege-Ventile, die jeweils eine Be- und eine Entlüftungsstellung besitzen. Die elektrisch ansteuerbaren Sperrventile sowie das 3/2-Wege-Ventil der ersten Schaltventileinheit sind zusätzlich pneumatisch ansteuerbar, wobei ein Ausgang des Sperrventils der zweiten Schaltventileinheit jeweils mit einem Steueranschluss der elektrisch ansteuerbaren Ventile verbunden ist. In der Durchlassstellung des manuell betätigbaren Sperrventils kann der pneumatische Steueranschluss des elektrisch ansteuerbaren 3/2-Wege-Ventils je nach Stellung eines manuell betätigbaren 3/2-Wege-Ventils be- oder entlüftet werden, so dass dieses die Be- oder Entlüftungsstellung einnimmt. Weiterhin sind entsprechende pneumatische Steueranschlüsse der elektrisch ansteuerbaren Sperrventile der ersten Schaltventileinheit über das manuell betätigbare Sperrventil der zweiten Schaltventileinheit mit dem anderen 3/2-WegeVentil der zweiten Schaltventileinheit verbindbar, so dass diese je nach Stellung des manuell betätigbaren 3/2-Wege-Ventils be- oder entlüftet werden können. Mittels der erläuterten pneumatischen Wechselwirkung zwischen der ersten und zweiten Schaltventileinheit kann somit auch bei einem Einbruch der elektrischen Leistungsversorgung in der Durchlassstellung des manuell betätigten Sperrventils je nach Stellung der beiden manuell betätigbaren 3/2-WegeVentile der zweiten Schaltventileinheit ein Be- oder Entlüften der Luftfederbälge erfolgen. Für eine konstruktive Ausgestaltung entsprechend der Patentschrift ist die manuell betätigbare Schaltventileinheit mit zwei axial verschiebbaren Steuerschiebern gebildet, die endseitig einen Betätigungsknopf besitzen, welcher von dem Benutzer betätigt werden kann. Steuerkanten des Steuerschiebers sind mit Dichtringen gebildet, die über einen Käfig an den gewünschten Orten fixiert sind.

DE 102 31 245 A1 betrifft eine Schaltventilbaugruppe, bei welcher ein Luftfederbalg selektiv über ein elektrisch ansteuerbares Sperrventil sowie ein diesem vorgeschaltetes elektrisch ansteuerbares 3/2-Wege-Ventil be- und entlüftbar ist. Die elektrische Ansteuerung der genannten Ventile erfolgt über eine Steuereinrichtung, welcher
- das Signal eines die Höhe des Fahrzeugaufbaus erfasssenden Sensors,
- das Signal eines manuell betätigbaren Schalters,
- das Signal eines Umgebungssensors, einer Digitalkamera oder eines Ultraschallsensors, der dazu dient, in Verbindung mit einem geeigneten Mustererkennungs-Algorithmus das Vorhandensein einer Laderampe in der unmittelbaren Umgebung des Fahrzeugs zu erfassen,
- das Signal eines Geschwindigkeitssensors, beispielsweise ein Radsensor eines Antiblockiersystems oder das Geschwindigkeitssignal eines Tachographen,

zugeführt wird. Weiterhin ist über die Steuereinheit eine Ansteuerung eines Proportionalventils eines Stoßdämpfers zur Beeinflussung der dynamischen Eigenschaften des Dämpfungssystems möglich.

DE 103 54 056 A1 offenbart eine Schaltventileinheit, mittels welcher eine Be- und Entlüftung von Luftfederbälgen über zwei parallel geschaltete pneumatische Zweige erfolgt. In einem ersten pneumatischen Zweig, dem ein Niveauregelventil vorgeschaltet ist, ist einem 3/2-WegeVentil ein Sperrventil vorgeschaltet, wobei beide genannten Ventile elektrisch von einer Steuereinheit ansteuerbar sind. Auch der zweite pneumatische Zweig verfügt über ein entsprechendes Sperrventil sowie ein 3/2-Wege-Ventil, wobei hier die genannten Ventile manuell betätigbar sind. Über den ersten pneumatischen Zweig erfolgt eine automatisierte Beeinflussung der pneumatischen Verhältnisse der Luftfederbälge über die Steuereinheit, während mittels des zweiten pneumatischen Zweigs gezielt vom Benutzer eine Be- und Entlüftung herbeigeführt werden kann. Bei einer in dieser Druckschrift offenbarten Ausführungsvariante sind allerdings die Ventile des ersten pneumatischen Zweigs pneumatisch angesteuert, wobei der Steuerdruck für diese Ventile beeinflusst wird über ein Paar 3/2-Wege-Ventile. Dieses Paar 3/2-Wege-Ventile ist einerseits elektrisch ansteuerbar von einer Steuereinheit. Andererseits können diese Ventile pneumatisch umgeschaltet werden entsprechend einem zweiten Steuerdruck, welcher abhängig ist von der Stellung eines weiteren Paares von 3/2-Wege-Ventilen, welche manuell betätigbar sind.

Weiterer Stand der Technik ist aus DE 10 2007 008 156 A1, DE 10 2007 008 159 A1, EP 0 536 124 B1 sowie DE 10 2007 005 979 A1 bekannt.

### AUFGABE DER ERFINDUNG

Der Erfindung liegt die Aufgabe zugrunde, eine Schaltventileinheit mit veränderter Kinematik für eine Übertragung einer Betätigungsbewegung oder Betätigungskraft, die über ein Betätigungsorgan, insbesondere einen Wählhebel, vom Benutzer aufgebracht wird, auf eine Ventilbaugruppe vorzuschlagen. Hierbei soll insbesondere sowohl eine elektrische Ansteuerung als auch eine manuelle Betätigung ermöglicht werden, wobei ein einfacher Aufbau, eine einfache Bedienung sowie die Betriebssicherheit gewährleistet sein soll.

### LÖSUNG

Die Aufgabe der Erfindung wird erfindungsgemäß mit den Merkmalen des Patentanspruchs 1 gelöst. Weitere Ausgestaltungen der erfindungsgemäßen Schaltventileinheit ergeben sich entsprechend den abhängigen Patentansprüchen 2 bis 22.

### BESCHREIBUNG DER ERFINDUNG

Die vorliegende Erfindung betrifft eine Schaltventileinheit zum Be- und Entlüften von Federbälgen zum Heben und Senken eines Aufbaus, wobei die Schaltventileinheit für ein Zugfahrzeug oder einen Anhänger Einsatz findet. Hierbei kann eine Be- und Entlüftung von Federbälgen von lediglich einer Achse, einer Fahrzeugseite, mehreren Achsen oder sämtlichen Federbälgen erfolgen.

Die erfindungsgemäße Schaltventileinheit besitzt eine Ventilbaugruppe, über welche die eigentlichen Leitungsverbindungen für das Gewährleisten des pneumatischen Hebens und Senkens geschaffen werden: In einer Stellung Heben der Ventilbaugruppe ist ein Luftfederbalganschluss mit einem Versorgungsanschluss verbunden, so dass von einer Druckluftquelle Druckluft dem Luftfederbalganschluss zugeführt werden kann, wodurch ein Heben des Aufbaus erfolgt. Weiterhin besitzt die Ventilbaugruppe eine Stellung Stopp, in der ein Luftfederbalganschluss abgesperrt ist, so dass die pneumatischen Verhältnisse in dem Luftfederbalg aufrechterhalten werden. Darüber hinaus besitzt die Ventilbaugruppe eine Stellung Senken, in der ein Luftfederbalganschluss mit einem Entlüftungsanschluss verbunden ist, so dass Druckluft aus dem Luftfederbalg über die Ventilbaugruppe abgeführt werden kann, was mit einem Senken des Fahrzeugs oder Anhängers verbunden ist.

Erfindungsgemäß ist eine manuelle Betätigungseinrichtung vorgesehen, über die unterschiedliche Stellungen, insbesondere Heben, Senken und/oder Stopp sowie ggf. eine Stellung Fahrt, durch manuelle Betätigung des Benutzers vorgegeben werden können. Die manuelle Betätigungseinrichtung ist mechanisch mit der Ventilbaugruppe gekoppelt.

Erfindungsgemäß besitzt die manuelle Betätigungseinrichtung eine manuell um eine Schwenkachse verschwenkbare Kurvenscheibe, so dass eine Vorgabe einer Betätigung der Ventilbaugruppe durch den Benutzer durch eine Verschwenkung der Kurvenscheibe um die Schwenkachse erfolgen kann. Hierbei kann der Benutzer die Verschwenkung der Kurvenscheibe um die Schwenkachse unmittelbar oder unter Zwischenschaltung einer getrieblichen Verbindung, eines Antriebsmechanismus und Ähnlichem vorgeben. Die Kurvenscheibe besitzt mindestens eine Kurvenfläche. Ein Stößel ist translatorisch und parallel zur Schwenkachse der Kurvenscheibe verschieblich geführt. Mit einer Verschwenkung der Kurvenscheibe wird der Stößel entlang der Kurvenfläche bewegt, was zur Folge hat, dass eine translatorische Bewegung des Stößels entsprechend einer Betätigungskontur der Kurvenfläche erfolgt. Der Stößel überführt (unmittelbar oder mittelbar) die Ventilbaugruppe in die Stellungen Heben, Senken und/oder Stopp. Somit wird erfindungsgemäß mittels des Zusammenwirkens von Stößel und Kurvenfläche eine verschwenkende Betätigungsbewegung der Kurvenscheibe umgewandelt in eine translatorische Bewegung mindestens eines Stößels. Auf diese Weise kann eine neuartige Betätigungskinematik gewährleistet werden.

In weiterer Ausgestaltung der erfindungsgemäßen Schaltventileinheit ist der oder ein entlang der Kurvenfläche geführter Stößel mit einem eine Be- und Entlüftung gewährleisteten Ventil gekoppelt. Eine Betätigungskontur der Kurvenfläche besitzt ein gleiches Niveau in der Stellung Stopp sowie einer der Stellungen Heben und Senken (beispielsweise Senken), aber ein abweichendes Niveau in der anderen der Stellungen Heben und Senken (für das genannte Beispiel: Heben). Für das in der Klammer genannte Beispiel kann insbesondere mit den gleichen Niveaus in den Stellungen Stopp und Senken das Ventil in seine Entlüftungsstellung geschaltet werden, während für das abweichende Niveau das Ventil in seine Belüftungsstellung geschaltet wird. Somit kann über die Kurvenscheibe zwischen einer Be- und Entlüftung umgeschaltet werden. (Über eine ergänzende Einrichtung ist dann u. U. dafür Sorge zu tragen, dass in der Stellung Stopp eine über das Ventil geschaffene Be- und Entlüftungsstellung nicht zu den Luftfederbälgen durchgeschaltet wird.)

In weiterer Ausgestaltung, ggf. unter Einsatz kumulativ zu dem zuvor genannten Ventil, ist in der erfindungsgemäßen Schaltventileinheit ein Ventil vorgesehen, welches eine Sperrstellung sowie eine Durchlassstellung besitzt. Dieses Ventil wird über den oder einen entlang der Kurvenfläche geführten Stößel betätigt. Hier besitzt die Betätigungskontur der Kurvenfläche ein erstes Niveau in der Stellung Stopp sowie mindestens ein vom dem ersten Niveau abweichendes zweites Niveau in den Stellungen Heben und Senken, wobei in den Stellungen Heben und Senken das gleiche oder unterschiedliche Niveaus gegeben sein können. Somit kann über die Betätigungskontur der Kurvenfläche das Sperrventil in der Stellung Stopp in eine Sperrstellung gebracht werden, während in den Stellungen Heben und Senken eine Durchlassstellung angesteuert wird.

Vorzugsweise findet eine Kurvenfläche Einsatz, welche in einer Kreisringfläche der Kurvenscheibe oder einem Teilsegment derselben gebildet ist, wobei die Betätigungskontur und die Bewegung des Stößels parallel zur Rotationsachse der Kurvenscheibe orientiert ist.

Eine besonders kompakte Ausgestaltung ergibt sich, wenn bei der Kurvenscheibe mehrere Kurvenflächen radial nebeneinander liegend angeordnet sind, wobei die mehreren Kurvenflächen jeweils mit einem Stößel in Wechselwirkung treten.

In weiterer Ausgestaltung der Erfindung kann auch zusätzlich eine elektrisch ansteuerbare Betätigungseinheit vorgesehen sein, über die in Abhängigkeit eines elektrischen Signals die Ventilbaugruppe in die Stellungen Heben, Senken und/oder Stopp überführbar ist. Erfindungsgemäß kann somit die Ventilbaugruppe sowohl durch die elektrisch ansteuerbare Betätigungseinheit als auch durch die manuelle Betätigungseinrichtung in die Stellung Heben, Senken und/oder Stopp überführt werden. Hierdurch werden die Eingriffsmöglichkeiten erweitert, wobei beispielsweise über die elektrisch ansteuerbare Betätigungseinheit eine automatisierte Veränderung der Stellungen Heben, Senken und/oder Stopp erfolgen kann, während die manuelle Betätigungseinrichtung dafür ausgerichtet ist, dass der Benutzer entsprechend seinen konkreten Wünschen Stellungen Heben, Senken und/oder Stopp herbeiführt. Während auch grundsätzlich ein derartiger kumulativer Betrieb mit der elektrisch ansteuerbaren Betätigungseinheit und der manuellen Betätigungseinrichtung gewünscht sein kann, ist es ebenfalls möglich, dass die manuelle Betätigungseinrichtung eine Art Rückfallebene darstellt, wenn die elektrisch ansteuerbare Betätigungseinheit ausfällt, insbesondere bei fehlender elektrischer Leistungsversorgung, und ein Heben, Senken und/oder eine Stopp-Stellung dennoch gewährleistet werden soll.

Gemäß einem weiteren Vorschlag ist die elektrische Betätigungseinheit geeignet ausgebildet, um während des Fahrbetriebs durch Überführung der Ventilbaugruppe in die Stellungen Heben, Senken und/oder Stopp eine Niveauregelung auszuführen. Unter Umständen kann hierdurch ein zusätzliches Niveauregelventil entfallen, so dass die Schaltventileinheit multifunktional ausgebildet ist einerseits zur gezielten Herbeiführung eines Hebens und Senkens des Fahrzeugs oder Anhängers bei Stillstand des Fahrzeugs und andererseits zur Durchführung der Niveauregelung. Eine derartige elektrisch angesteuerte Niveauregelung bietet vielfältige Vorteile. Beispielsweise ist es möglich, dass während des Fahrbetriebs unterschiedliche Fahrhöhen durch die Niveauregelung gewährleistet werden. Insbesondere kann eine automatische Anpassung der Fahrhöhe an die Fahrgeschwindigkeit, den Untergrund, die Beladung und Ähnliches erfolgen. Weiterhin ist es möglich, dass eine Steuereinrichtung, welche das elektrische Signal für die elektrisch ansteuerbare Betätigungseinheit erzeugt, integral mit der EBS-Steuereinrichtung ausgebildet ist, so dass diese Steuereinrichtung auch für die Bremsregelung zuständig ist. Alternativ ist es möglich, eine separate Steuereinheit einzusetzen, welche beispielsweise mit der EBS-Steuereinrichtung vernetzt sein kann, so dass ein Datenaustausch zwischen diesen beiden Steuereinrichtungen erfolgt. Insbesondere können als Signale aus der EBS-Steuereinheit Signale wie beispielsweise die Fahrgeschwindigkeit oder eine Bremsbetätigung sowie ein Ausmaß der Bremsbetätigung genutzt werden. Möglich ist so auch, dass ein Aussetzen der Niveauregelung, also eine Fixierung einer eingeregelten Niveauhöhe erfolgt, wenn ein Bremsbetrieb vorliegt. Dies hat den Vorteil, dass der gesamte vorliegende Druckluftvorrat für das vorrangige Ziel der Bremsung eingesetzt werden kann, ohne dass eine Störung durch die Betätigung der Luftfederanlage erfolgt.

Weiterhin ist erfindungsgemäß infolge der elektrisch realisierten Niveauregelung über die elektrische Betätigungseinheit ermöglicht, dass für den Fall, dass die Niveauregelung nicht ordnungsgemäß funktioniert, dem Fahrer signalisiert werden kann, dass die Niveauregelung nicht gewährleistet ist. Hierdurch kann die Betriebssicherheit erhöht werden. Hingegen ist es für herkömmliche Niveauregelventile nicht möglich, ein Fehlversagen oder eine nicht ausreichende Funktion für den Fahrer sichtbar zu machen.

Weiterhin kann eine der zuvor genannten Steuereinrichtungen verbunden sein mit einem Höhensensor, so dass in der Steuereinrichtung das Signal des Höhensensors für den Abstand zwischen einer Achse und dem Fahrzeugrahmen vorliegt, wobei dieses Signal dann für die Niveauregelung verwendet werden kann.

Ein weiterer gravierender Vorteil einer elektrischen Niveauregelung unter Nutzung der Ventilbaugruppe ist, dass diese gegenüber bekannten mechanisch gesteuerten Niveauregeleinrichtungen mit verbesserten Regelungsstrategien durchgeführt werden kann. Beispielsweise ist eine Filterung der Signale möglich und eine beliebige Gestaltung etwaiger Totzeiten für das Ansprechen der Niveauregelung.

Ein weiterer Vorteil des Einsatzes einer elektronischen Steuerung der Niveauhöhe ist, dass mit einem Ende eines Ladevorgangs an einer Rampe nicht zwingend eine Rückführung in die Fahrhöhe erfolgen muss. Vielmehr kann automatisiert erkannt werden, dass eine Fahrt unmittelbar bevorsteht oder bereits ein Fahrbetrieb eingesetzt werden kann. Eine derartige automatisierte Erkennung kann beispielsweise erfolgen durch
- eine Erkennung des Öffnens der Tür,
- durch Erkennung einer Fahrersitzbelegung,
- durch Erkennung der Aktivierung der Zündung,
- durch Überwachung eines Geschwindigkeitssignals, Überwachung eines GPS-Signals dahingehend, dass sich das Fahrzeug bewegt

und Ähnliches. Für eine Erkennung eines bereits erfolgten oder bevorstehenden Fahrbeginns kann dann über die elektronische Steuereinrichtung die Niveauregelung aktiviert werden und automatisch das Niveau auf die gewünschte Fahrhöhe geregelt werden.

Weiterhin liegt der Erfindung die Beobachtung zugrunde, dass für herkömmliche Schaltventileinheiten der Fahrer unter Umständen an einer Rampe eine gewünschte Niveauhöhe des Fahrzeugs oder des Anhängers manuell einstellt. Kommt es dann zu einem Be- oder Entladen des Fahrzeugs oder Anhängers, ändert sich infolge der sich verändernden Beladung die Niveauhöhe, so dass der Fahrer entweder in Kauf nehmen muss, dass die Rampenhöhe nicht exakt aufrechterhalten wird oder dass manuell eine Nachregelung der Niveauhöhe vorgenommen werden muss entsprechend der zunehmenden Be- oder Entladung. Hier schlägt die Erfindung vor, dass zunächst der Fahrer beispielsweise über die manuelle Betätigungseinrichtung eine Anpassung der Niveauhöhe des Fahrzeugs oder Anhängers an die Rampe vornimmt. Anschließend kann der Fahrer über ein separates Betätigungselement, beispielsweise einen Schalter im Bereich der Rampe oder in der Fahrgastzelle bzw. dem Führerhaus, eine automatisierte Niveauregelung für ein Halten dieser Niveauhöhe aktivieren. Bei dieser wird über die elektrisch ansteuerbare Betätigungseinheit die einmal von dem Fahrer manuell vorgegebene Niveauhöhe aufrechterhalten unabhängig davon, ob eine Be- oder Entladung erfolgt. Wird die Beladung verändert, überführt die elektrisch ansteuerbare Betätigungseinheit die Ventilbaugruppe entsprechend dem Bedarf in die Stellung Heben oder Senken, um die Niveauhöhe konstant zu halten. Selbstverständlich ist es ebenfalls möglich, dass die Niveauhöhe nicht erstmalig manuell vorgegeben wird, sondern eine automatisierte Rampenanpassung erfolgt, indem eine mechanische Einrichtung oder eine Sensorik genutzt wird, die automatisiert die Rampenhöhe erkennt, so dass dann eine automatische Anpassung der Niveauhöhe an die Höhe der Rampe vorgenommen werden kann. Das automatisierte Halten der Niveauhöhe auch während der Be- oder Entladung kann im Extremfall vermeiden, dass mit zunehmender Entladung die Niveauhöhe immer weiter ansteigt, bis der Federbalg unzulässig gelängt wird und eine maximal zulässige Niveauhöhe überschritten wird.

Selbstverständlich ist es ebenfalls möglich, dass zwar zunächst die Niveauhöhe während der Entladung nicht konstant gehalten wird, aber über die elektrisch ansteuerbare Betätigungseinheit überwacht wird, ob die maximale Niveauhöhe erreicht wird, so dass mit dem Erreichen dieser maximalen Niveauhöhe das Niveau gehalten werden kann oder sogar ein Absenken erfolgt, um Beschädigungen zu vermeiden.

Das Einwirken der elektrisch ansteuerbaren Betätigungseinheit auf die Ventilbaugruppe kann beliebig sein. Durchaus denkbar ist, dass hierfür eine elektromagnetische Einrichtung Einsatz findet, bei welcher ein Anker eine Verschiebung eines Ventilelements elektromagnetisch herbeiführt. Gemäß einem besonderen Vorschlag der Erfindung ist allerdings die elektrisch ansteuerbare Betätigungseinheit mit mindestens einem Magnetventil ausgebildet. Derartige Magnetventile sind zu verhältnismäßig geringen Kosten verfügbar, aber ermöglichen dennoch eine Ansteuerung über ein elektrisches Signal, welches einer Steuereinrichtung entstammt. Über das Magnetventil kann ein Pneumatikdruck gesperrt oder freigegeben werden oder eine Entlüftung erfolgen, über welche eine pneumatische Beaufschlagung der Ventilbaugruppe steuerbar ist und die Stellung der Ventilbaugruppe beeinflussbar ist. Entsprechend dieser pneumatischen Beaufschlagung erfolgt dann eine Überführung der Ventilbaugruppe in die Stellung Heben, Senken und/oder Stopp. Beispielsweise kann in der Ventilbaugruppe ein Druckraum vorhanden sein, der über das Magnetventil pneumatisch beaufschlagt werden kann oder entlüftet werden kann. In dem Druckraum kann kolbenartig oder schieberartig ein verschiebliches Ventilelement wie ein Ventilstößel oder ein Steuerschieber angeordnet sein, dessen Stellung somit von der pneumatischen Beaufschlagung abhängig ist.

Durchaus möglich ist, dass die Ventilbaugruppe mit einem einzigen Schieber ausgebildet ist, welcher eine Vielzahl von Stellungen aufweist zur Gewährleistung der Funktionen Heben, Senken und Stopp. Für eine weitere Ausführungsform der Erfindung besitzt allerdings die Ventilbaugruppe zumindest zwei Schieber. Ein erster Schieber verbindet in einer Stellung den Luftfederbalganschluss mit dem Verbindungsanschluss, während dieser in einer anderen Stellung den Luftfederbalganschluss gegenüber dem Verbindungsanschluss absperrt. Damit kann je nach Stellung des ersten Schiebers über den Verbindungsanschluss ein Austausch von Druckluft in jedwede Richtung erfolgen oder nicht. Weiterhin ist ein zweiter Schieber vorgesehen, welcher in einer Stellung den Entlüftungsanschluss mit dem Verbindungsanschluss verbindet, während in einer anderen Stellung der Verbindungsanschluss mit dem Versorgungsanschluss verbunden ist. Somit kann bei einer Verbindung des Luftfederbalganschlusses mit dem Verbindungsanschluss entsprechend der Stellung des ersten Schiebers je nach Stellung des zweiten Schiebers entweder eine Entlüftung des Luftfederbalgs oder eine Belüftung desselben erfolgen. Auch möglich ist, dass der erste Schieber zweifach vorgesehen ist, so dass insgesamt drei Schieber vorgesehen sind, womit eine zweikreisige Ausbildung der Luftfederungsanlage ermöglicht ist.

Für den Fall der Ausbildung der Ventilbaugruppe mit dem ersten und zweiten Schieber ist es besonders vorteilhaft, wenn die elektrisch ansteuerbare Betätigungseinheit mit zwei Magnetventilen ausgebildet ist, die in diesem Fall beispielsweise als einfache 3/2-Wege-Ventile ausgebildet sein können. Diese beiden Magnetventile sind jeweils einem der beiden Schieber zugeordnet, so dass je nach Bestromung der Magnetventile die Stellung der Schieber selektiv verändert werden kann. Hierbei kann der Schieber eine Steuer- oder Kolbenfläche aufweisen, die in den genannten Druckraum hineinragt, so dass eine pneumatische Beaufschlagung eine Kraft auf den Schieber erzeugt. Ist diese Kraft größer als eine Gegenkraft einer Rückstellfeder, kann bei pneumatischer Beaufschlagung eine Verschiebung des Schiebers erfolgen. Entfällt hingegen der Druck in dem Druckraum, kann eine Rückführung des Schiebers über die Rückführfeder erfolgen.

In weiterer Ausgestaltung wird auch die manuelle Betätigung der Ventilbaugruppe, nämlich die Betätigung eines Schiebers oder der Schieber durch die mechanische Betätigungseinrichtung, dadurch ermöglicht, dass mit einer Betätigung dieser mechanischen Betätigungseinrichtung eine Axialkraft auf den oder die Schieber aufgebracht wird, so dass die Schieber auch ohne einen vorliegenden Pneumatikdruck in der Druckkammer manuell verschoben werden können.

Für eine weitere Ausgestaltung der Erfindung ist die elektrische Betätigungseinheit geeignet ausgebildet, um in Abhängigkeit von Betriebs- und/oder Umgebungsparametern eine automatische Rückführung der Ventilbaugruppe in die Stellung Stopp zu verursachen. Dies ist insbesondere dann von Vorteil, wenn ein Fahrbetrieb unmittelbar bevorsteht oder bereits erfolgt. Auf diese Weise kann eine Reset-to-Ride-Funktion gewährleistet werden, so dass vermieden ist, dass während eines Fahrbetriebs die Ventilbaugruppe noch eine Stellung Heben oder Senken einnimmt.

Entsprechend einer weiteren erfindungsgemäßen Ausgestaltung ist die elektrische Betätigungseinheit (zusätzlich) derart ausgebildet, dass in Abhängigkeit von Betriebs- und/oder Umgebungsparametern auch eine automatische Rückführung der manuellen Verriegelungseinrichtung in die Stellung Stopp verursacht wird.

In erfindungsgemäßer konstruktiver Ausgestaltung ist die manuelle Betätigungseinrichtung und die elektrische Betätigungseinheit mit einem gemeinsamen Gehäuse ausgebildet, so dass die Schaltventileinheit eine kompakte, mit dem Gehäuse geschlossene und an dem Fahrzeug montierbare Einheit bildet. In dem Gehäuse ist eine Zwischenwand angeordnet, die durchgehend oder lediglich in der Art eines Trägers ausgebildet sein kann. Die Zwischenwand trennt wesentliche Komponenten der manuellen Betätigungseinrichtung und der elektrischen Betätigungseinheit und/oder der Ventilbaugruppe, wobei ein mechanisches Kopplungselement durch die Zwischenwand hindurchtritt. Bei diesem mechanischen Kopplungselement kann es sich beispielsweise um einen Endbereich zumindest eines Schiebers handeln oder eine Art Stößel. welcher mit dem Schieber mechanisch zusammenwirkt. Andererseits kann die Zwischenwand neben der Trennung der manuellen Betätigungseinrichtung und der elektrischen Betätigungseinheit oder der Ventilbaugruppe weitere Funktionen erfüllen. Beispielsweise können in der Zwischenwand pneumatische Kanäle gebildet sein, um beispielsweise pneumatische Signale von den Magnetventilen zu den Druckräumen der Ventilbaugruppe zu führen und/oder entsprechende pneumatische Signale zu pneumatischen Komponenten der manuellen Betätigungseinrichtung zu überführen. Darüber hinaus kann die Zwischenwand eine Tragfunktion für Bauelemente der Ventilbaugruppe und/oder der manuellen Betätigungseinrichtung bilden. Schließlich kann die Zwischenwand die Montage der Schaltventileinheit vereinfachen oder ermöglichen, wobei beispielsweise die Zwischenwand als eine Art Deckel für die manuelle Betätigungseinrichtung oder die Ventilbaugruppe bilden kann, so dass bei Vormontage der Ventilbaugruppe mit dem Deckel dann weitere Bestandteile hieran montiert werden können.

In weiterer Ausgestaltung der erfindungsgemäßen Schaltventileinheit besitzt die manuelle Betätigungseinrichtung ein Betätigungselement, welches eine Betätigungskontur besitzt. Über die Betätigungskontur erfolgt eine Überführung der Ventilbaugruppe in die Stellungen Heben, Senken und/oder Stopp. Eine derartige Betätigungskontur ermöglicht eine exakte Führung und eine besonders einfache Transformation einer Betätigungsbewegung, die manuell herbeigeführt wird, in eine geeignete Stellbewegung für die Komponenten, insbesondere Schieber, der Ventilbaugruppe.

In besonderer Ausgestaltung der Erfindung ist das genannte Betätigungselement als eine Art Kurvenscheibe ausgebildet. Eine derartige Kurvenscheibe kann eine einzige Kurvenfläche besitzen, die mit einem entlang der Kurvenfläche bewegten Stößel in Wechselwirkung steht, der wiederum mit einem Schieber in Wechselwirkung stehen kann. Durch den Kurvenverlauf dieser einzigen Kurvenfläche kann dann die Abhängigkeit zwischen der Bewegung der manuellen Betätigungseinrichtung und der Bewegung des Stößels exakt vorgegeben werden. Durchaus möglich ist auch, dass mehrere Stößel, die beispielsweise mehreren Schiebern zugeordnet sein können, an unterschiedlichen Punkten an einer derartigen einzigen Kurvenfläche anliegen. In alternativer Ausgestaltung schlägt die Erfindung allerdings vor, dass an der Kurvenscheibe mehrere Kurvenflächen vorgesehen sind, die jeweils einem einzigen Stößel zugeordnet sind, so dass durch jede einzelne Kurvenfläche die Bewegung eines Stößels vorgegeben werden kann.

Für eine weitere Ausführungsform der Erfindung ist zumindest eine der Stellungen Heben oder Senken der manuellen Betätigungseinrichtung, insbesondere das Betätigungselement, verriegelbar über ein Verriegelungselement (welches auch eine Art Rastierung sein kann). Erfindungsgemäß ist dieses Verriegelungselement aus einer verriegelten Stellung in eine entriegelte Stellung überführbar. Eine derartige Überführung erfolgt durch die elektrische Betätigungseinheit infolge einer pneumatischen Beaufschlagung. Weiterhin ist erfindungsgemäß eine Rückstellfeder vorgesehen. In der entriegelten Stellung kann über die Rückführfeder das Betätigungselement oder die manuelle Betätigungseinrichtung aus der Stellung Heben oder Senken in die Stellung Stopp überführt werden. Auf diese Weise kann auch eine Art Reset-to-Ride-Funktion erfüllt werden. Die erfindungsgemäße Verriegelung einer Stellung Heben ist insbesondere von Vorteil für besonders lange Hebevorgänge, bei denen über die Verriegelung entbehrlich ist, dass der Fahrer einen Betätigungshebel ständig in der Position Heben halten kann. Vielmehr kann bei Verriegelung der Stellung Heben der Fahrer in der Zwischenzeit weitere Arbeiten ausführen. Hingegen ist eine Verriegelung einer Stellung Senken insbesondere von Vorteil zur Gewährleistung eines Roll-On-Roll-Off-Betriebs, der beispielsweise gegeben ist auf einem Schiff oder bei einem Transport mit der Bahn. Hierbei ist es gewünscht, dass die Luftfederbälge nicht belüftet sind, damit kein "Aufschaukeln" von Schwingungen des Aufbaus auf den Luftfederbälgen erfolgen kann. Vielmehr soll der Aufbau des Fahrzeugs mechanisch auf Puffer aufgelegt werden und eine ständige Entlüftung der Luftfederbälge erfolgen. Ergänzend kann ein Festzurren des Fahrzeugaufbaus erfolgen. Es versteht sich, dass die Verriegelung der Stellungen Heben oder Senken alternativ oder kumulativ ermöglicht werden kann.

Im Rahmen der Erfindung können beliebige Freiheitsgrade für ein Handbetätigungsorgan benutzt werden. In besonderer Ausgestaltung der Erfindung ist allerdings das Handbetätigungsorgan verschwenkbar zwischen den Stellungen Heben, Senken und Stopp.

In weiterer erfindungsgemäßer Ausgestaltung ist zusätzlich zu dem Verschwenk-Freiheitsgrad des Handbetätigungsorgans das Handbetätigungsorgan translatorisch verschieblich. Über eine translatorische Verschiebung des Handbetätigungsorgans kann das Verriegelungselement erfindungsgemäß von der verriegelten Stellung in die entriegelte Stellung überführt werden.

In alternativer Ausgestaltung besitzt das Handbetätigungsorgan grundsätzlich einen Verschwenk-Freiheitsgrad. Zusätzlich ist an dem Handbetätigungsorgan oder abseits desselben ein Löseelement vorgesehen, welches translatorisch verschieblich gegenüber dem Handbetätigungsorgan gelagert ist. Über eine translatorische Verschiebung des Löseelements ist das Verriegelungselement von der verriegelten Stellung in die entriegelte Stellung überführbar.

Durch die beiden genannten alternativen Ausführungsformen kann der Benutzer nach einem Vorgang Heben oder Senken manuell durch translatorische Verschiebung des Handbetätigungsorgans oder durch Betätigung des Löseelements eine Entriegelung vornehmen und letztendlich die Schaltventileinheit in die Stellung Stopp zurückführen, so dass beispielsweise ein Fahrbetrieb aufgenommen werden kann.

Während durchaus denkbar ist, dass die elektrische Betätigungseinheit lediglich für eine automatische Betätigung über die Steuereinheit genutzt wird und die manuelle Betätigung ausschließlich über die manuelle Betätigungseinrichtung erfolgt, kann zusätzlich die elektrische Betätigungseinheit über ein manuelles Bedienelement ansteuerbar sein, so dass beispielsweise über einen Schalter mit Positionen Heben und Senken auch elektrisch die Funktion Heben und Senken gewährleistet werden kann. In besonderer Ausgestaltung dieser Ausführungsform ist das manuelle Bedienelement als Fernbedienung ausgebildet, die entweder kabelgebunden entfernt von dem Fahrzeug betätigt werden kann oder beispielsweise als eine Art Funk-Fernbedienung ausgebildet ist, die somit abseits des Fahrzeugs betätigt werden kann und von dem Fahrer oder Bediener mitgeführt werden kann. Ebenfalls möglich ist, dass das manuelle Bedienelement im Bereich der Fahrgastzelle angeordnet ist.

Für den Fall, dass die Luftfederungsanlage zweikreisig ausgebildet ist, insbesondere mit Ausbildung der Schaltventileinheit mit einem ersten Schieber sowie zwei zweiten Schiebern, kann es möglich sein, dass Luftfederbalganschlüsse für die beiden Kreise über die Schaltventileinheit miteinander verbunden sind, insbesondere unter Zwischenschaltung einer Drossel. Eine derartige Drossel kann beispielsweise mit einem Verbindungskanal ausgebildet sein, in welchem eine Bohrung mit verringertem Querschnitt ausgebildet ist. Die Kopplung der beiden Luftfederkreise über eine derartige Drossel hat den Vorteil, dass ein zeitlich verzögerter Ausgleich der Niveauhöhen der beiden Fahrzeugseiten ermöglicht ist. Hierbei kann die Drossel als feste, immer wirksame und nicht beeinflussbare Bohrung oder anderweitiges Ventilelement ausgebildet sein. Durchaus möglich ist allerdings, dass in der Schaltventileinheit eine elektrisch ansteuerbare Drossel angeordnet ist, wobei beispielsweise
- eine Sperrstellung möglich ist, über welche die Kopplung der beiden Kreise aufgehoben werden, kann,
- eine Drosselstellung möglich ist, in welcher eine Drosselung erfolgt und
- eine Durchlassstellung möglich ist, in welcher eine verringerte Drosselwirkung oder keine Drosselwirkung besteht.

Vorteilhafte Weiterbildungen der Erfindung ergeben sich aus den Patentansprüchen, der Beschreibung und den Zeichnungen. Die in der Beschreibungseinleitung genannten Vorteile von Merkmalen und von Kombinationen mehrerer Merkmale sind lediglich beispielhaft und können alternativ oder kumulativ zur Wirkung kommen, ohne dass die Vorteile zwingend von erfindungsgemäßen Ausführungsformen erzielt werden müssen. Weitere Merkmale sind den Zeichnungen - insbesondere den dargestellten Geometrien und den relativen Abmessungen mehrerer Bauteile zueinander sowie deren relativer Anordnung und Wirkverbindung - zu entnehmen. Die Kombination von Merkmalen unterschiedlicher Ausführungsformen der Erfindung oder von Merkmalen unterschiedlicher Patentansprüche ist ebenfalls abweichend von den gewählten Rückbeziehungen der Patentansprüche möglich und wird hiermit angeregt. Dies betrifft auch solche Merkmale, die in separaten Zeichnungen dargestellt sind oder bei deren Beschreibung genannt werden. Diese Merkmale können auch mit Merkmalen unterschiedlicher Patentansprüche kombiniert werden. Ebenso können in den Patentansprüchen aufgeführte Merkmale für weitere Ausführungsformen der Erfindung entfallen.

### KURZBESCHREIBUNG DER FIGUREN

Im Folgenden wird die Erfindung anhand in den Figuren dargestellter bevorzugter Ausführungsbeispiele weiter erläutert und beschrieben.
- **Fig. 1**: zeigt eine stark schematische Darstellung einer Luftfederungsanlage mit einer erfindungsgemäßen Schaltventileinheit.
- **Fig. 2**: zeigt eine schematische Darstellung einer Luftfederungsanlage mit einer weiteren erfindungsgemäßen Schaltventileinheit mit Funktionsbildern der eingesetzten Ventile sowie der Wechselwirkung derselben miteinander.
- **Fig. 3**: zeigt eine schematisierte, aber konstruktive Ausgestaltung einer erfindungs- gemäßen Schaltventileinheit in einem Längsschnitt und in einer Grundstellung.
- **Fig. 4**: zeigt ein Detail IV der Schaltventileinheit gemäß Fig. 3.
- **Fig. 5**: zeigt ein Detail V der Schaltventileinheit gemäß Fig. 3.
- **Fig. 6**: zeigt eine Abwicklung einer Betätigungskontur einer Kurvenfläche und deren Zusammenwirken mit Stößels zur Betätigung der zugeordneten Ventile zwischen Stellungen Heben, Stopp und Senken.
- **Fig. 7**: zeigt eine Kurvenscheibe eines Betätigungselements mit der Betätigungsfläche gemäß Fig. 6.
- **Fig. 8**: zeigt eine Abwicklung von zwei Betätigungskonturen von zwei Kurvenflächen und deren Zusammenwirken mit Stößels zur Betätigung der zugeordneten Ventile zwischen Stellungen Heben, Stopp und Senken.
- **Fig. 9**: zeigt eine Explosionsdarstellung von Bestandteilen der erfindungsgemäßen Schaltventileinheit gemäß Fig. 3.
- **Fig. 11**: zeigt die Schaltventileinheit gemäß Fig. 3 mit Ausführung einer Reset-to-Ride- Funktion durch eine elektrisch ansteuerbare Betätigungseinheit.
- **Fig. 12**: zeigt die Schaltventileinheit gemäß Fig. 3 und 11 für eine Stellung Senken, die durch die elektrisch ansteuerbare Betätigungseinheit herbeigeführt ist.
- **Fig. 13**: zeigt die Schaltventileinheit gemäß Fig. 3, 11 und 12 in einer Stellung Heben, die durch die elektrisch ansteuerbare Betätigungseinheit herbeigeführt ist.
- **Fig. 14**: zeigt Bestandteile einer weiteren erfindungsgemäßen Schaltventileinheit mit einer pneumatisch entriegelbaren Verriegelungseinheit für ein Betätigungselement.
- **Fig. 15**: zeigt eine weitere erfindungsgemäße Schaltventileinheit, bei welcher ein Wähl- hebel mit einem Stößel zum manuellen und mechanischen Entriegeln einer Ent- riegelungsvorrichtung ausgebildet ist.
- **Fig. 16**: zeigt eine geringfügige Modifikation der erfindungsgemäßen Schaltventileinheit gemäß Fig. 2, für welche über eine reduzierte elektrische Betätigungseinheit lediglich eine Entriegelung mit Reset-to-Ride-Funktion erfolgt, während an- sonsten ausschließlich eine manuelle Betätigung der Schaltventileinheit erfolgt.
- **Fig. 17**: zeigt eine der Modifikation gemäß Fig. 16 entsprechende Modifikation der Schalt- ventileinheit gemäß Fig. 3, 11, 12, 13 in weiterer konstruktiver Ausgestaltung.
- **Fig. 18**: zeigt eine Schaltventileinheit entsprechend Figur 16 mit ergänzendem Reset-to- Ride-Ventil innerhalb der Schaltventileinheit und extern angeordnetem Niveauregelventil.

### FIGURENBESCHREIBUNG

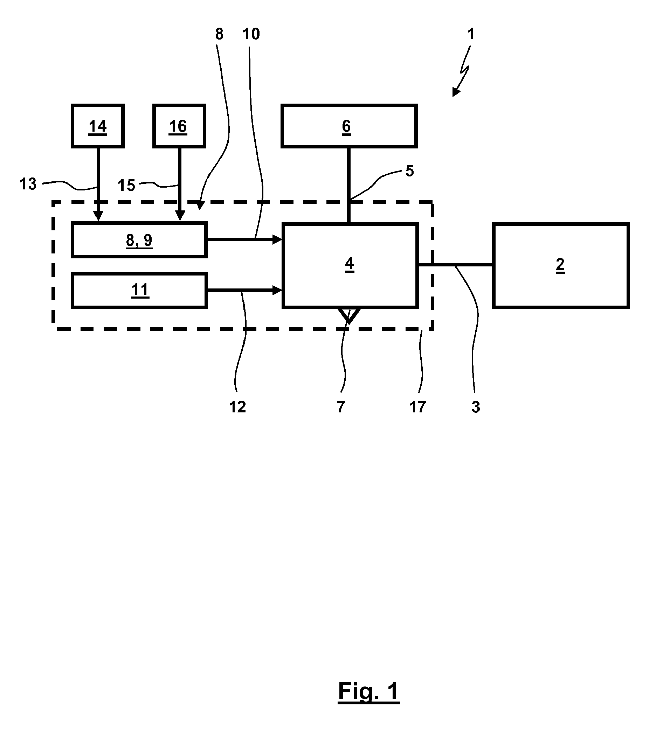

**Fig. 1** zeigt stark schematisiert eine Luftfederungsanlage 1. Diese ist mit Luftfederbälgen 2 gebildet, die über einen Luftfederbalganschluss 3 mit einer Ventilbaugruppe 4 verbunden sind. Ein Versorgungsanschluss der Ventilbaugruppe 4 ist mit einer Druckluftquelle oder einem Vorratsbehälter 6 verbunden, während ein Entlüftungsanschluss 7 mit einer Drucksenke oder der Atmosphäre verbunden ist. Je nach Stellung der Ventilbaugruppe 4 kann
- der Luftfederbalganschluss 3 abgesperrt werden, so dass über diesen kein Austausch von Druckluft mit dem Luftfederbalg 2 erfolgen kann,
- eine Zufuhr von Druckluft aus dem Vorratsbehälter 6 über den Versorgungsanschluss 5, die Ventilbaugruppe 4 und den Luftfederbalganschluss 3 zu dem Luftfederbalg 2 erfolgen oder
- eine Abfuhr von Druckluft von dem Luftfederbalg 2 über den Luftfederbalganschluss 3,
   die Ventilbaugruppe 4 zu dem Entlüftungsanschluss 7
   erfolgen. Die Ventilbaugruppe 4 kann beliebig ausgebildet sein mit mehreren separat ausgebildeten Ventilen einer einzigen Ventilbaugruppe in beliebiger Ausbildung, beispielsweise als Sitzventil oder als Schieberventil. Es versteht sich, dass abweichend zu der schematisierten Darstellung in Fig. 1 die Luftfederungsanlage 1 auch zweikreisig ausgebildet sein kann, so dass beispielsweise unterschiedlichen Seiten des Fahrzeugs jeweils mehrere Luftfederbälge 2 zugeordnet sind und eine separate Be- und Entlüftung dieser Kreise möglich ist. Für eine Ansteuerung der Ventilbaugruppe 4 gibt es zwei unterschiedliche Möglichkeiten:

- Zunächst ist eine elektrisch ansteuerbare Betätigungseinheit 8 vorgesehen, welche mit einer Steuereinheit 9 ausgebildet ist. Die Steuereinheit 9 erzeugt ein elektrisches Signal 10, auf Grundlage dessen eine Umschaltung der Ventilbaugruppe 4 von einer Stellung in eine andere Stellung erfolgen kann. Dies kann auf beliebiger Weise erfolgen. Beispielsweise kann ein elektromagnetischer Aktuator eine Kraft erzeugen, welche eine Veränderung einer Stellung der Ventilbaugruppe 4 zur Folge hat. Ebenfalls möglich ist, dass das elektrische Signal 10 zur Aussteuerung eines Pneumatikdrucks, beispielsweise unter Einsatz eines Magnetventils, verwendet wird, wobei dann der ausgesteuerte Pneumatikdruck verwendet wird, um eine Stellung mindestens eines Bauelements der Ventilbaugruppe 4 zu verändern.
- Weiterhin ist eine manuelle Betätigungseinrichtung 11 vorgesehen, die über eine mechanische Kopplung 12 derart auf die Ventilbaugruppe 4 einwirken kann, dass eine Veränderung der Stellung derselben herbeiführbar ist. Die manuelle Betätigungseinrichtung 11 kann von dem Benutzer betätigt werden, was vorzugsweise mit einer Bewegung von Bauelementen der manuellen Betätigungseinrichtung 11 einhergeht, die, zumindest über eine Teilbewegung, korreliert mit einer Bewegung zumindest eines Elements der Ventilbaugruppe 4 zur Veränderung einer Stellung der Ventilbaugruppe 4. Hierbei kann die mechanische Kopplung beliebig ausgebildet sein, beispielsweise mit eine Stößel, einer verschwenkten Betätigungswelle, einem Hebelmechanismus oder eine getrieblichen Verbindung, wobei eine beliebige Abhängigkeit eine Bewegung des mindestens einen Ventilelements der Ventilbaugruppe 4 von einer Stellbewegung der manuellen Betätigungseinrichtung 11 gegeben sein kann, insbesondere eine lineare oder nichtlineare funktionale Abhängigkeit und/oder eine Kopplung mit einzelnen Ventilelementen lediglich über eine Teilbewegung. Weiterhin überträgt die mechanische Kopplung 12 eine Bewegung und/oder Kräfte auf die Ventilbaugruppe 4, was über einen oder mehrere Freiheitsgrade der manuellen Betätigungseinrichtung 11 erfolgen kann. Auch möglich ist, dass mehrere separat betätigbare Betätigungselemente an der manuellen Betätigungseinrichtung 11 vorgesehen sind, deren Stellbewegungen über die mechanische Kopplung 12 separat oder gemeinsam übertragen werden.

Rast- oder Verriegelungseinrichtungen können an der manuellen Betätigungseinrichtung 11, der mechanischen Kopplung 12 und/oder der Ventilbaugruppe 4 wirksam werden, die die genannten Freiheitsgrade zeitweise festsetzen können und manuell oder auf Grundlage der elektrisch ansteuerbaren Betätigungseinheit 8 gelöst werden können

Auch möglich ist, dass die elektrisch ansteuerbare Betätigungseinheit 8 über ein manuelles Betätigungselement verfügt, mit dessen Betätigung die Steuereinheit 9 ein elektrisches Signal 10 erzeugt oder verändert, so dass nach manueller Betätigung auf elektrischem Wege eine Veränderung der Stellung der Ventilbaugruppe 4 herbeigeführt werden kann. Alternativ oder zusätzlich zu der genannten manuellen Betätigung der Steuereinheit 9 kann in der Steuereinheit 9 die Notwendigkeit einer Veränderung der Stellung der Ventilbaugruppe 4 automatisch erkannt werden, womit dann ein geeignetes elektrisches Signal 10 erzeugt wird. Hierzu kann der Steuereinheit 9 beispielsweise ein elektrisches Signal 13 eines Sensors 14 zugeführt werden, welcher die aktuelle Niveauhöhe des Fahrzeugaufbaus erfasst. In der Steuereinheit 9 kann dann ein geeignetes elektrisches Signal 10 ermittelt werden zur Ermöglichung einer Niveauregelung, so dass über die Ventilbaugruppe 4 eine Be- und Entlüftung des mindestens einen Luftfederbalgs 2 derart erfolgt, dass eine Niveauhöhe konstant gehalten wird. Die Steuereinheit 9 kann weitere elektrische Signale 15 berücksichtigen, die beispielsweise einem Sensor 16 für eine Raddrehzahl, eine Fahrgeschwindigkeit, eine Bremsbetätigung, eine Erfassung einer Anwahl einer Gangstufe, eine Fahrersitzbelegungserkennung entstammen können, so dass automatisiert ein bevorstehender oder einsetzender Fahrbetrieb erkannt werden kann und über das elektrische Signal 10 eine Reset-to-Ride-Funktion initiiert werden kann. Sowohl über die elektrisch ansteuerbare Betätigungseinheit 8 als auch über die manuelle Betätigungseinrichtung 11 können Stellungen Fahrt (Einregeln einer Soll-Niveauhöhe mit einer externen Niveauregelung), Stopp (Absperren der Luftfederbälge 2 zwischen Stellungen Heben, Senken mit oder ohne Halten des Niveaus in Form einer Niveauregelung), Heben (Belüften der Luftfederbälge 2) und Senken (Entlüften der Luftfederbälge 2) herbeigeführt werden, wobei auch die Stellung Fahrt entfallen kann, wenn eine Niveauregelung erfolgt durch automatische elektrische Ansteuerung der Stellungen Heben und Senken aus Stopp, womit eine externe, u. U. mechanisch gekoppelte Niveauregelung entfallen kann.

Für das in Fig. 1 dargestellte schematische Ausführungsbeispiel ist eine erfindungsgemäße Schaltventileinheit 17 gebildet mit der Ventilbaugruppe 4, der manuellen Betätigungseinrichtung 11 sowie der elektrischen Betätigungseinheit 8, wobei die Schaltventileinheit 17 den Versorgungsanschluss 5, Entlüftungsanschluss 7 und Luftfederbalganschluss 3 besitzt sowie eine Schnittstelle für das elektrische Signal 10 der Steuereinheit 9. Es versteht sich, dass die Steuereinheit 9 auch außerhalb der Schaltventileinheit 17 über ein elektrisches Signal 10 eine in die Schaltventileinheit integrierte oder externe pneumatische Einheit oder elektromagnetische Aktuatoreinheit ansteuern kann, welche dann über eine geeignete Schnittstelle ein pneumatisches Signal oder eine Stellbewegung oder eine Stellkraft an die Schaltventileinheit 17 übergibt zur Beeinflussung der Stellung der Ventilbaugruppe 4 je nach elektrischem Signal 10 der Steuereinheit 9. Weiterhin kann die Steuereinheit 9 als integrale Steuereinheit für weitere Zwecke vorgesehen sein, insbesondere als EBS-Steuereinheit. Für den Fall, dass mehrere separate Steuereinheiten vorgesehen sind, kann die Steuereinheit 9 mit weiteren Steuereinheiten kommunizieren, wobei auch ein CAN-Bussystem genutzt werden kann. Die manuelle Betätigungseinrichtung 11 kann mit einem oder mehreren verschwenkbaren Wählhebeln, mindestens einem Wählschieber, einem Knopf und Ähnlichem ausgebildet sein, wobei hiermit mindestens ein mechanisches Signal über die mechanische Kopplung 12, insbesondere eine Kraft und/oder eine Stellbewegung, übertragen werden kann. Vorzugsweise ist die manuelle Betätigungseinrichtung 11 mit einem Handbetätigungsorgan ausgebildet, welches zwei Freiheitsgrade besitzt, nämlich einen Schwenkfreiheitsgrad sowie einen translatorischen Freiheitsgrad, über welche unterschiedliche Stellbewegungen über die mechanische Kopplung 12 übertragen werden können.

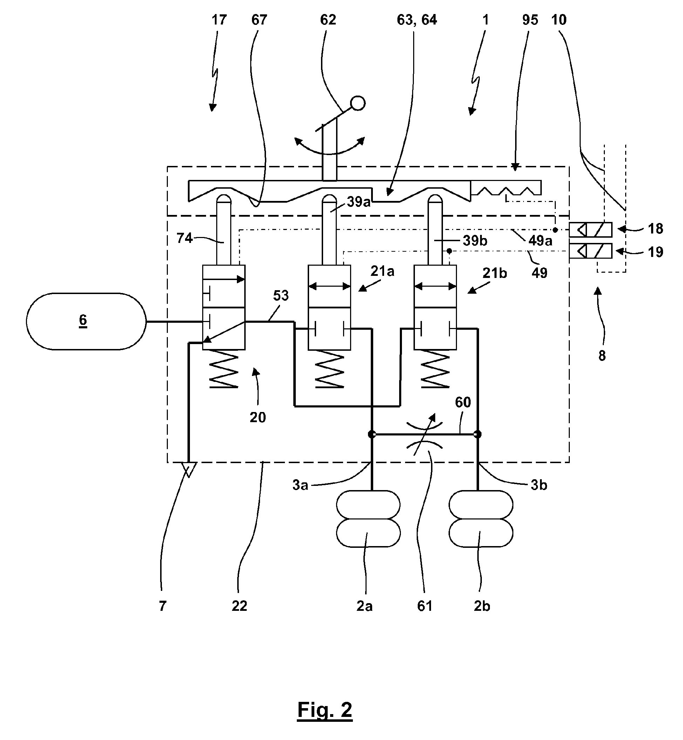

**Fig. 2** zeigt eine zweikreisige Luftfederungsanlage 1 mit jeweils einem Kreis zugeordneten Luftfederbälgen 2a, 2b. Die beiden Kreise sind über einen Verbindungskanal 60 und eine hierin angeordnete Querdrossel in Form eines elektrisch schaltbaren Magnetventils 61 in einem Gehäuse 22 der Schaltventileinheit 17 miteinander verbunden. Den Luftfederbalganschlüssen 3a, 3b ist jeweils ein Ventil 21a, 21b vorgeordnet, die als Sperrventile oder 2/2-Wege-Ventile ausgebildet sind. Die Ventile 21a, 21b können über einen Steuerkanal 49 entgegen einer Beaufschlagung durch eine Feder aus der in Fig. 2 wirksamen Sperrstellung in eine Durchlassstellung verbracht werden. Eingangsseitig sind die Ventile 21a, 21b mit einer gemeinsamen Verbindungsleitung 53 verbunden, welche über ein Ventil 20 be- und entlüftet werden kann. Das Ventil 20 ist als 3/2-Wege-Ventil ausgebildet mit einem Anschluss für die Verbindungsleitung 53, einem Anschluss zur pneumatischen Verbindung mit einem Entlüftungsanschluss 7 sowie einem Anschluss für einen Vorratsbehälter 6. Entgegen der Beaufschlagung durch eine Feder kann durch pneumatische Beaufschlagung des Steuerkanals 49A das Ventil 20 aus der in Fig. 2 wirksamen Entlüftungsstellung in eine Belüftungsstellung verbracht werden. Für eine Be- und Entlüftung der Steuerkanäle 49, 49A sind über elektrische Signale 10 ansteuerbare Magnetventile 18, 19 verantwortlich, die über eine Steuereinheit 9 geeignet angesteuert werden. Zusätzlich können die Ventile 20, 21a, 21b über ein Betätigungselement 63, insbesondere eine Kurvenscheibe 64 mit einer Betätigungskontur 67 entsprechend einer Verschwenkung eines Wählhebels 62 betätigt werden, indem mit einer Verschwenkung des Wählhebels 62 und des Betätigungselements 63 bzw. der Kurvenscheibe 64 Stößel mit den Ventilen 20, 21a, 21b gekoppelte Stößel 74, 39a, 39b entlang der Betätigungskontur 67 bewegt werden, womit entsprechend eines mäanderförmigen Verlaufs der Betätigungskontur 67 eine Veränderung der Stellung der Ventile 20, 21a, 21b einhergeht. Weiterhin ist das Betätigungselement 63 in in Fig. 2 nicht dargestellter Weise gekoppelt mit einem Rückstellelement, insbesondere einer Rückstellfeder, welche grundsätzlich bei einer Verdrehung des Wählhebels 62 und des Betätigungselements 63 aus der in Fig. 2 dargestellten Stellung Stopp eine Rückführung in diese Stellung bewirkt. Allerdings ist eine Verriegelungs- und Kopplungseinheit 95 vorgesehen, welche in einer Verriegelungs- oder Kopplungsstellung das Betätigungselement 63 in einer Stellung Heben und/oder Senken rastieren oder verriegeln kann. Die Verriegelungs- oder Kopplungseinheit 95 kann außer Eingriff gebracht werden für eine pneumatische Beaufschlagung des Steuerkanals 49a, also eine Umschaltung des Magnetventils 18 in eine Belüftungsstellung durch geeignete Ansteuerung mittels elektrischer Signale 10 durch die Steuereinheit, so dass bei Erkennen eines einsetzenden Fahrbetriebs eine Reset-to-Ride-Funktion durch die Steuereinheit veranlasst werden kann. Ergänzend kann ermöglicht sein, dass die Verriegelungs- oder Kopplungseinheit 95 auch manuell aufgehoben werden kann. Für eine derartige manuelle Aufhebung der Verriegelungs- oder Rastwirkung der Kopplungseinheit 95 gibt es vielfältige Möglichkeiten, wobei im Folgenden ein Ausführungsbeispiel erläutert wird, in welchem eine Auflösung der Verriegelungs- oder Rastwirkung erfolgt durch translatorische Verschiebung des Wählhebels 62.

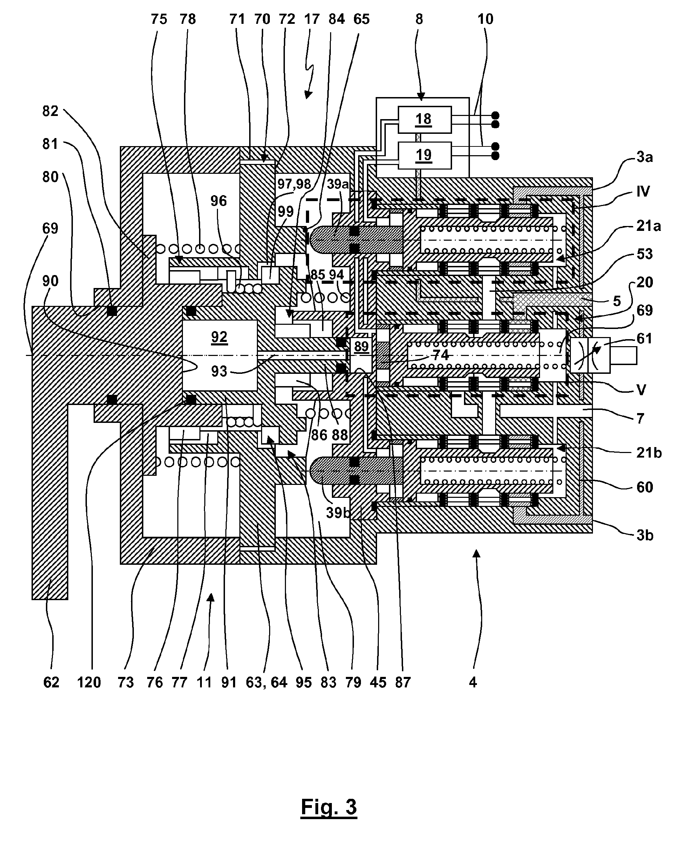

In einer beispielhaften konstruktiven vereinfachten Ausgestaltung einer Schaltventileinheit 17 gemäß **Fig. 3** werden von dem ersten Ventil 20 die beiden Ventile 21a, 21b versorgt, die jeweils mit einem Luftfederbalganschluss 3a, 3b verbunden sind für eine zweikreisige Luftfederungsanlage.

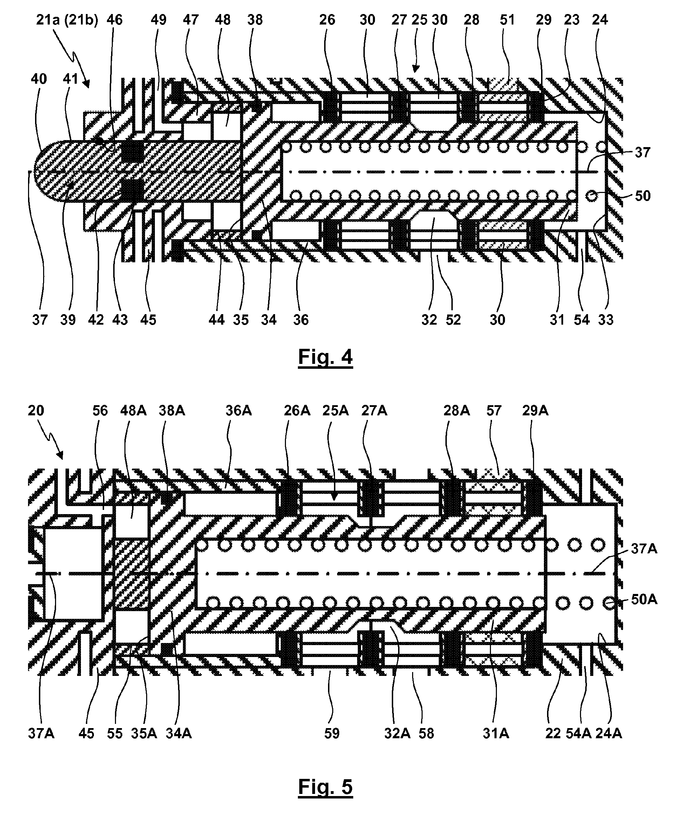

Das Ventil 21a (21b) ist für diese Ausführungsform in Steuerschieberbauweise ausgebildet, was im Detail in **Fig. 4** dargestellt ist: Ein Gehäuse 22 der Schaltventileinheit 17 besitzt eine mit einem Absatz 23 abgestufte Sacklochbohrung 24. In den außen liegenden erweiterten Teilbereich der Sacklochbohrung 24 ist eine Steuerkanten-Einheit 25 eingesetzt, die Steuerkanten bildende Dichtelemente 26-29 besitzt, die über Führungskäfige 30 in einem definierten Abstand gehalten sind. Die Steuerkanten-Einheit 25 ist an dem Absatz 23 in eine axiale Richtung abgestützt. In die Sacklochbohrung 24 und die Dichtelemente 26 ist ein Schieber 31 eingeführt, wobei die Dichtelemente 26-29 unter Abdichtung zur Anlage an die Mantelfläche des Schiebers 31 kommen. Ungefähr mittig besitzt der Schieber 31 eine Steuernut 32, die für das dargestellte Ausführungsbeispiels als Umfangsnut ausgebildet ist. In dem einen Boden 33 der Sacklochbohrung 24 gegenüber liegendem Endbereich bildet der Schieber 31 einen Kolben 34 aus mit von dem Boden 33 weg weisender Steuer- oder Kolbenfläche 35. In die Sacklochbohrung 24 ist weiterhin eine Hülse 36 eingesetzt. Die Hülse 36 sichert die Steuerkanten-Einheit 25 gegen axiale Bewegungen von dem Absatz 23 weg. Weiterhin findet die Hülse 36 passgenaue Aufnahme in der Sacklochbohrung 24. Die zylinderförmige Innenfläche der Hülse 36 bildet eine Gleitfläche für axiale Verschiebungen des Schiebers 31 entlang einer Längsachse 37-37. Die Mantelfläche des Kolbens 34 besitzt eine umlaufende Nut, in welche ein Dichtring 38 eingesetzt ist zwecks Abdichtung des Kolbens 34 gegenüber der Hülse 36. An der Kolbenfläche 35 stützt sich einseitig in Richtung des Bodens 33 ein Stößel 39 ab. Möglich ist auch, dass der Stößel 39 fest mit dem Kolben 34 und dem Schieber 31 verbunden ist oder integral von diesem ausgebildet ist. Der Stößel 39 besitzt eine abgerundete Stirnfläche 40 und eine zylinderförmige Mantelfläche 41 mit einer Umfangsnut 42, in die ein Dichtring 43 eingesetzt ist. Weiterhin bildet der Stößel 39 in dem dem Kolben 34 zugewandten Endbereich eine Distanzhülse 44 aus, die beispielsweise sternförmig über Träger mit der Mantelfläche 41 verbunden ist. Ebenfalls möglich ist, dass die Distanzhülse 41 als separates Bauelement ausgebildet ist. Die Sacklochbohrung 24 ist mit einem Deckel oder einer Zwischenwand 45 nach außen verschlossen. Die Zwischenwand 45 besitzt eine Durchgangsbohrung 46, durch welche der Stößel 39 mit der Mantelfläche 41 unter Abdichtung durch den Dichtring 43 hindurch tritt, so das die Stirnfläche 40 aus der Zwischenwand 45 in Fig. 4 nach links heraussteht. Die Zwischenwand 45 besitzt einen nach innen in die Sacklochbohrung 24 hineinragenden umlaufenden Bund 47, welcher einen Endanschlag für die Distanzhülse 44 und damit den Stößel 39 sowie den Schieber 31 bildet. Eine Steuerkammer 48 ist durch die Kolbenfläche 35, eine Innenfläche der Distanzhülse 44, die Mantelfläche 41 und die Zwischenwand 45 begrenzt. Ein Steuerkanal 49 mündet in die Steuerkammer 48. Der Schieber 31 ist über eine vorgespannte Druckfeder 50 am Boden 33 der Sacklochbohrung 24 abgestützt, was zur Folge hat, dass der Schieber 31 in Fig. 4 nach links gedrückt wird und zur Anlage an die Distanzhülse 44 kommt, welche an dem Bund 47 der Zwischenwand 45 abgestützt ist.

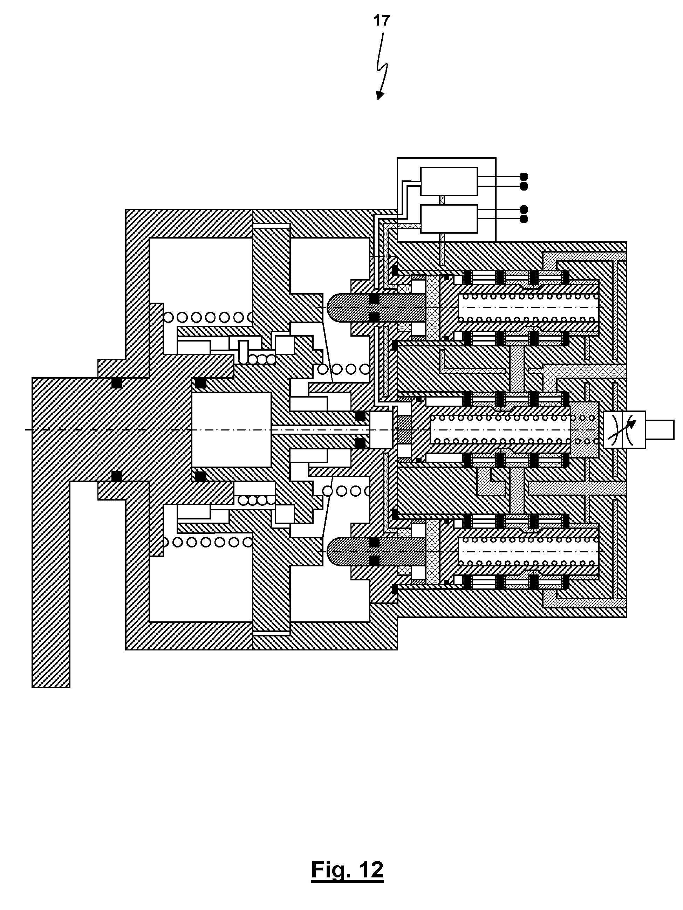

Das Ventil 21 verfügt über Anschlüsse 51, 52, wobei der Anschluss 51 mit dem Luftfederbalganschluss 3 pneumatisch verbunden ist, während der Anschluss 52 beider Ventile 21a, 21b über eine zentrale Verbindungsleitung 53 mit dem Ventil 20 pneumatisch verbunden ist. Für die in Fig. 4 wirksame Stellung mündet der Anschluss 52 in die Steuernut 32, wobei ein Übertritt von Druckluft zwischen den Anschlüssen 51, 52 abgesperrt ist über das Dichtelement 28, welches abseits der Steuernut 32 an der Mantelfläche des Schiebers 31 anliegt. Wird hingegen durch pneumatische Beaufschlagung der Steuerkammer 48 der Schieber unter Beaufschlagung der Druckfeder 50 nach rechts verschoben (vgl. **Fig. 12**), gelangt das Dichtelement 28 in den Bereich der Steuernut 32, so dass zwischen Schieber 31 und Dichtelement 28 im Bereich der Steuernut ein Übertrittsquerschnitt gebildet ist, wodurch ein Druckluftaustausch zwischen den Anschlüssen 51, 52 ermöglicht ist. Auf der der Steuerkammer 48 abgewandten Seite des Schiebers 31 ist zur Ermöglichung der Veränderung der Stellung des Schiebers 31 eine Entlüftungsbohrung 54 vorgesehen.

Für das in Fig. 3 dargestellte Ausführungsbeispiel ist auch das Ventil 20 in SteuerschieberBauweise ausgebildet. Das Ventil 20 ist im Detail in **Fig. 5** dargestellt. Hinsichtlich der Sacklochbohrung 24A, der Entlüftungsbohrung 54A, der Druckfeder 50A, des Schiebers 31A, der Steuerkanteneinheit 25A mit Dichtelementen 26A-29A, des Kolbens 34A mit Dichtelement 38A und der Hülse 36A ist das Ventil 20 entsprechend dem Ventil 21 ausgebildet, wobei zur Unterscheidung der Bezugszeichen für das Ventil 20 für diese Bauelemente der Buchstabe A ergänzt worden ist. Hingegen bezeichnen ergänzte Buchstaben a, b korrespondierende Bauelemente der Ventile 21a, 21b.

Auch das Ventil 20 besitzt einen Stößel 74, welcher allerdings in der Darstellung gemäß Fig. 5 teilweise verdeckt ist. Dieser ist entsprechend gekoppelt mit einem Distanzelement 55, welches die linke, in Fig. 5 eingenommene Endstellung des Schiebers 31A vorgibt. Ein Steuerkanal 56 mündet in die Steuerkammer 48A. Das Ventil 20 verfügt über einen Anschluss 57, der pneumatisch mit einem Versorgungsanschluss 5 verbunden ist. Ein weiterer Anschluss 58 ist pneumatisch mit der Verbindungsleitung 53 verbunden, während ein Anschluss 59 pneumatisch mit dem Entlüftungsanschluss 7 verbunden ist.

In der in Fig. 5 dargestellten linken Endstellung des Schiebers 31A ist zwischen dem Dichtelement 27A und der Steuernut 32A ein Übertrittsquerschnitt gebildet, über welchen die Anschlüsse 58, 59 miteinander verbunden sind, so dass letztendlich die Verbindungsleitung 53 entlüftet ist. Wird hingegen der Schieber 31A durch pneumatische Beaufschlagung der Steuerkammer 48 nach rechts verschoben, kommt das Dichtelement 27A links von der Steuernut 32A zur Anlage an die Mantelfläche des Schiebers 31A, wodurch der zuvor genannte Übertrittsquerschnitt geschlossen wird und die Anschlüsse 58, 59 voneinander getrennt sind. In der rechten Endstellung des Schiebers 31A wird stattdessen ein Übertrittsquerschnitt zwischen dem Dichtelement 28A und der Steuernut 32A gebildet, so dass eine pneumatische Verbindung zwischen den Anschlüssen 57, 58 geschaffen ist. Als Folge erfolgt eine Belüftung der Verbindungsleitung 53.

Für die in Fig. 4 und 5 dargestellten Ventile 20, 21a, 21b stützt sich die Druckfeder 50, 50A in einer Innenbohrung des Schiebers 31A ab.

Wie aus Fig. 3 ersichtlich ist, sind die Luftfederbalganschlüsse 3a, 3b der beiden Kreise der Luftfederungsanlage über einen Verbindungskanal 60 miteinander gekoppelt, wobei für das dargestellte Ausführungsbeispiel in dem Verbindungskanal 60 eine Querdrossel angeordnet ist, hier ein elektrisch ansteuerbares Magnetventil 61 mit einer Durchlassstellung, einer Drosselstellung und einer Sperrstellung. Weiterhin ist in Fig. 3 zu erkennen, dass eine Be- und Entlüftung der Steuerkammern 48, 48A über die Steuerkanäle 49, 56 und die diesen vorgeschaltete 3/2-Wege-Magnetventile 18, 19 entsprechend den elektrischen Signalen 10 erfolgt.

Die Zwischenwand 45 begrenzt ein geschlossenes Gehäuse für die Ventilbaugruppe 4, die mit den Ventilen 21a, 21b, 20 gebildet ist, wobei die Stößel 39a, 39b und 74 aus diesem an sich geschlossenen Gehäuse durch die Zwischenwand 45 herauskragen. Weiterhin bildet die Zwischenwand 45 Kanäle für die Übertragung eines Steuerdrucks zu den Steuerkammern 48, 48a aus. Darüber hinaus dient die Zwischenwand 45 der Führung der Stößel 39a, 39b und 74.

Für das dargestellte Ausführungsbeispiel ist die mit den Magnetventilen 18, 19 gebildete elektrisch ansteuerbare Betätigungseinheit 8 von außen an das Gehäuse 22 angesetzt oder angeflanscht. Durchaus möglich ist aber, dass die derart gebildete elektrisch ansteuerbare Betätigungseinheit 8 in das Gehäuse 22 integriert ist. Weiterhin kann das Gehäuse 22 geeignete Schnittstellen für elektrische Signale 10 zur Ansteuerung der Magnetventile 18, 19, 61, für pneumatische Verbindungen für den Luftfederbalganschluss 3, den Versorgungsanschluss 5, den Entlüftungsanschluss 7 sowie die Steuerkanäle 49, 56 besitzen, die als eine einzige kompakte Schnittstelle oder mehrere verteilte Schnittstellen ausgebildet sein kann/können.

In Fig. 3 ist die manuelle Betätigungseinrichtung 11 links von der Zwischenwand 45 angeordnet. Diese verfügt über einen Wählhebel 62, der sowohl um eine Längsachse 69-69 der Schaltventileinheit 17 verschwenkbar ist als auch entlang dieser verschieblich ist, was gemäß Fig. 3 durch Hereindrücken nach rechts erfolgt. Die manuelle Betätigungseinrichtung 11 gewährleistet folgende Funktionen:
- Über eine Verdrehung des Wählhebels 62 kann ein Betätigungselement 63, welches als Kurvenscheibe 64 ausgebildet ist und axial entlang der Längsachse 69-69 fixiert ist und lediglich einen Schwenk-Freiheitsgrad besitzt, verschwenkt werden. Diese Verschwenkung führt unter Nutzung mindestens einer Kurvenfläche 65, 66 der Kurvenscheibe 64 entsprechend mindestens einer Betätigungskontur 67, 68 zu einer Verschiebung der Stößel 39a, 39b und 74.
- Weiterhin ist eine Verriegelung des Betätigungselements 63 in Form der Kurvenscheibe 64 (oder des hiermit gekoppelten Wählhebels 62) in ausgewählten Stellungen, insbesondere den Stellungen Heben und Senken, möglich.
- Infolge einer manuellen Betätigung des Wählhebels 62, insbesondere durch translatorische Bewegung desselben in Fig. 3 nach rechts, kann eine Entriegelung einer verriegelten Stellung erfolgen mit automatisierter Rückführung in eine Grundstellung oder die Stellung Stopp.
- Schließlich ist auch eine automatische pneumatische Entriegelung mit hierdurch eingeleiteter Rückführung in die Grundstellung oder Stellung Stopp möglich, sofern der Benutzer eine derartige Rückstellung vor Aufnahme eines Fahrbetriebs vergisst.

Hierzu ist das Betätigungselement 63 über eine geeignete Lager- oder Führungseinheit axial in Richtung der Längsachse 69-69 festgelegt, aber um diese verschwenkbar gelagert. Für das in Fig. 3 dargestellte Ausführungsbeispiel ist eine derartige Lager- oder Führungseinheit gebildet über eine umlaufende Führungsnut 70, in der das Betätigungselement 63 in Form der Kurvenscheibe 64 radial außen liegend aufgenommen ist. Für das dargestellte Ausführungsbeispiel erstreckt sich das Gehäuse 22 über die Zwischenwand 45 hinaus und besitzt in dem außen liegendem Endbereich eine Querschnittserweiterung 71 mit einem Absatz 72. Stirnseitig ist an das Gehäuse 22 ein Deckel 73 angeflanscht, welcher die Querschnittserweiterung teilweise abdeckt, so dass die Führungsnut 70 von dem Absatz 72, der Querschnittserweiterung 71 und einer Stirnfläche des Deckels 73 begrenzt ist.

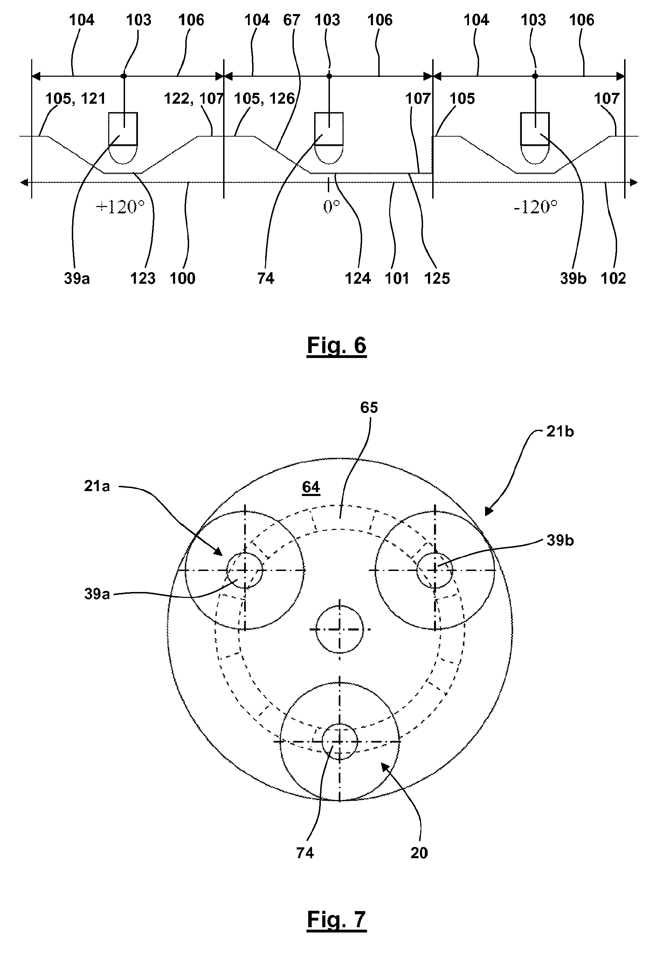

Die Kurvenscheibe 64 besitzt im Bereich der den Stößeln 39a, 39b sowie 74 zugewandten Fläche eine Kurvenfläche 65, welche eine Betätigungskontur 67 bildet. Die Betätigungskontur ist in **Fig. 6** in einer Abwicklung dargestellt, während bei Blickrichtung aus Richtung der Stößel 39, 74 in Fig. 7 die in Umfangsrichtung der Kurvenscheibe 64 verlaufende Kurvenfläche 65 zu erkennen ist. Die Betätigungskontur 67 verläuft mäanderförmig in Richtung der Längsachse 69-69 bzw. in Richtung der Stößel 39a, 39b, 74. Gleiten die Stößel 39a, 39b, 74 entlang der Betätigungskontur 67, kommt es zu einer durch die Betätigungskontur 67 und damit durch die Verdrehung des Betätigungselements 63 veranlassten Bewegung der Stößel 39, 74.

Das Betätigungselement 63 ist auf der den Stößeln 39, 74 abgewandten Seite drehfest, aber axial verschieblich mit dem Wählhebel 62 gekoppelt über eine geeignete Kopplungseinheit 75. Für das in Fig. 3 dargestellte Ausführungsbeispiel ist die Kopplungseinheit 75 als in Umfangsrichtung formschlüssige, aber axial verschiebliche Verbindung ausgebildet, beispielsweise mit einer Art Keilverzahnung mit Eintritt einer Feder 76 des Wählhebels 62 in eine Nut 77 des Betätigungselements 73 (oder umgekehrt) oder Ähnliches. Weiterhin ist zwischen die Kurvenscheibe 64 und dem Wählhebel 62 eine vorgespannte Druckfeder 78 zwischengeschaltet. Mit dem Überstand des Gehäuses 22 über die Zwischenwand 45 und den Deckel 73 ist ein Innenraum 79 der manuellen Betätigungseinrichtung 11 begrenzt, wobei der Deckel 73 eine Bohrung 80 besitzt, durch welche eine zylinderförmige Mantelfläche des Wählhebels 62 unter Abdichtung infolge eines Dichtelements 81 sowie Gewährleistung des translatorischen Freiheitsgrads sowie des Schwenk-Freiheitsgrads hindurch tritt. In der linken axialen Endstellung, die in Fig. 3 dargestellt ist, wird der Wählhebel 62 durch die vorgespannte Druckfeder 78 mit einem umlaufenden Bund 82 gegen den Deckel 73 gedrückt. Unter Beaufschlagung der Druckfeder 78 kann der Wählhebel 62 in axialer Richtung entlang der Längsachse 69-69 nach rechts verschoben werden, wobei über den gesamten Verschiebeweg die drehfeste Kopplung über die Kopplungseinheit 75 erhalten bleibt.

Weiterhin verfügt die manuelle Betätigungseinrichtung 11 über ein Verriegelungselement 83. Das Verriegelungselement 83 ist drehfest um die Längsachse 69-69, aber axial entlang dieser verschieblich über eine Kopplungseinheit 84 mit der Zwischenwand 45 gekoppelt. Für das dargestellte Ausführungsbeispiel ist die Kopplungseinheit 84 mit einer Nut 85 der Zwischenwand und einer in die Nut 85 formschlüssig in Umfangsrichtung eingreifenden Feder 86 des Verriegelungselements 83 ausgebildet. Die Zwischenwand 45 besitzt eine Sacklochbohrung 87, die gemeinsam mit einem Fortsatz 88 des Verriegelungselements 83, der kolbenartig in die Sacklochbohrung 87 eintritt, einen ersten Druckraum 89 begrenzt. Weiterhin besitzt der Wählhebel 62 innerhalb des Deckels 73 eine Sacklochbohrung 90, in welcher ein Kolbenbereich 91 des Verriegelungselements 83 unter Bildung eines zweiten Druckraums 92 unter Abdichtung durch ein Dichtelement 120 aufgenommen ist. Die beiden Druckräume 89, 92 sind über eine Längsbohrung 93 pneumatisch miteinander verbunden. Die Druckräume 89, 92 sowie die Längsbohrung 93 stehen in ständiger pneumatischer Verbindung mit dem Steuerkanal 56, so dass die Be-und Entlüftung der Druckräume 89, 92 über das Magnetventil 18 vorgegeben werden kann.

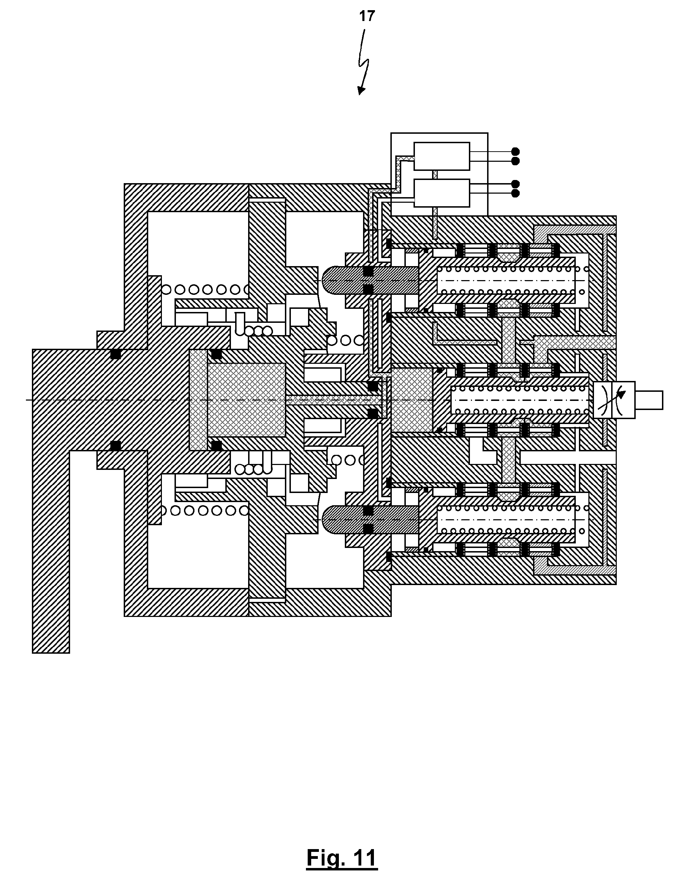

Das Verriegelungselement 83 ist über eine Druckfeder 94 in Richtung der Längsachse 69-69 gegenüber der Zwischenwand 45 unter Vorspannung abgestützt, so dass für drucklose Druckräume 89, 92 das Verriegelungselement 83 durch die Druckfeder 94 nach links in die in Fig. 3 skizzierte Endlage gedrückt wird. Erfolgt hingegen durch die Schaltung des Magnetventils 18 in die Belüftungsstellung eine Druckbeaufschlagung der Druckräume 89, 92, entsteht infolge der größeren Wirkfläche in dem Druckraum 92 an dem Verriegelungselement 83 eine resultierende Kraft, welche das Verriegelungselement 83 unter ergänzender Beaufschlagung der Druckfeder 94 nach rechts bewegt. Über den gesamten Verschiebeweg bis in eine rechte Endstellung (vgl. **Fig. 11**) bleibt die drehfeste Kopplungseinheit 84 wirksam.

Eine weitere Kopplungseinheit 95 ist zwischen der Kurvenscheibe 64 und dem Verriegelungselement 83 vorgesehen. Weiterhin ist zwischen Verriegelungselement 83 und Kurvenscheibe 64 eine Torsionsfeder 96 zwischengeschaltet, welche in einer Stellung Stopp der Kurvenscheibe 64 eine Gleichgewichtslage besitzt, während die Torsionsfeder 96 ein Torsionsmoment auf die Kurvenscheibe 64 in den Stellungen Heben und Senken ausübt, welches auf eine Rückführung der Kurvenscheibe 64 in die Stellung Stopp ausgerichtet ist. Die Kopplungseinheit 95 verriegelt die Kurvenscheibe 64 gegenüber dem Verriegelungselement 83 in den Stellungen Heben und/oder Senken wozu die Kurvenscheibe 64 zwei in Umfangsrichtung beabstandete Nuten 97, 98 besitzt, in die in den Stellungen Heben und/oder Senken eine Feder 99 des Verriegelungselements 83 eintreten kann. Mit Bewegung des Verriegelungselements 83 ausgehend von einer derartigen Verriegelungsstellung Heben oder Senken in die rechte axiale Endlage (vgl. Fig. 11) kommt die Kopplungseinheit 95 außer Wirkung, indem die Feder 99 außer Eingriff mit einer Nut 97, 98 kommt. In dieser Stellung kann die Torsionsfeder 96 eine Rückstellung in die mittige Stellung Stopp bewirken. Eine Bewegung des Verriegelungselements 83 kann einerseits, wie bereits oben erwähnt, herbeigeführt werden durch Belüftung der Druckräume 92, 89 infolge der Überführung des Magnetventils 18 in die Belüftungsstellung. Andererseits kann dies erfolgen durch manuelle Betätigung des Wählhebels 62 in Form eines Hereindrückens des Wählhebels 62 in Richtung der Längsachse 69-69, womit der Wählhebel 62 Kontaktkräfte auf das Verriegelungselement 83 überträgt, die dieses nach rechts unter Beaufschlagung der Druckfeder 94 schieben können. Für eine Verschwenkung des Wählhebels 62 aus einer Stellung Stopp gleitet die Feder 99 entlang einer Stirnseite der Kurvenscheibe 64, bis eine Stellung Heben oder Senken erreicht ist und die Feder 99 in eine Nut 97, 98 eintreten kann, was sich in einer durch die Druckfeder 94 veranlasste Bewegung des Verriegelungselements 83 nach links äußert. Es versteht sich, dass die Kopplungseinheit 95 entsprechend eine verriegelte Stellung Stopp gewährleisten kann, was allerdings zur Folge hat, dass für eine Überführung des Wählhebels in eine Stellung Heben oder Senken vor einer Verschwenkung ebenfalls eine axiale Betätigung des Wählhebels 62 erfolgen muss.

Wie aus Fig. 7 ersichtlich ist, sind die Ventile 21a, 21b sowie 20 und die zugeordneten Stößel 39a, 39b, 74 in Umfangsrichtung um die Längsachse 69-69 verteilt, wodurch sich ein kompakter Aufbau ergibt. Vorzugsweise sind die Stößel, wie in Fig. 6 und 7 dargestellt, gleichmäßig in Umfangsrichtung verteilt, also mit einem Umfangswinkel von 120° voneinander beabstandet. Somit wäre streng genommen eine Darstellung der Ventilbaugruppe 4 gemäß der Ansicht in Fig. 3, in welcher alle drei Ventile 20, 21a, 21b in einem Längsschnitt zu erkennen sind, nicht möglich. Zwecks Vereinfachung der Darstellung ist hier daher eine Schnittführung durch mehrere Ebenen gewählt.

Gemäß Fig. 6 bildet die Kurvenfläche 65 drei Teilbereiche 100, 101, 102 ungefähr gleicher Erstreckung, wobei der Teilbereich 100 während der Verschwenkung des Wählhebels 62 in Wechselwirkung mit dem Stößel 39a tritt, der Teilbereich 101 in Wechselwirkung mit dem Stößel 74 tritt sowie der Teilbereich 102 in Wechselwirkung mit dem Stößel 39b tritt. Fig. 6 zeigt die relative Anordnung der Betätigungskontur 67 relativ zu den Stößeln 39a, 39b sowie 74 in einer Stellung Stopp 103. Eine Bewegung 104 der Stößel 39a, 74, 39b nach links relativ zu der Betätigungskontur 67 durch Verschwenkung des Wählhebels 62 führt eine Stellung Heben 105 herbei. Hingegen führt eine Bewegung 106 aus der Stellung Stopp 103 in Fig. 6 nach rechts in eine Stellung Senken 107.

Die Teilbereiche 100 und 102 der Betätigungskontur 67 sind identisch ausgebildet, so dass veranlasst durch die Stößel 39a, 39b die Ventile 21a, 21b immer dieselben Stellungen einnehmen. Die Teilbereiche 100, 102 sind ausgehend von der Stellung Stopp 103 für beide Bewegungen 104, 106 ansteigend ausgebildet mit Gipfeln oder Plateaus im Bereich der Stellungen Heben, Senken 105, 107, für welche die Betätigungskontur 67 am weitesten in Richtung der Ventilbaugruppe 4 hervortritt, so dass hier die Stößel 39a, 39b maximal hineingeschoben sind in das Gehäuse 22 und die Ventile 21, 21b, die rechte Endstellung einnehmen. Hingegen ist der Abstand der Betätigungskontur in der Stellung Stopp 103 in den Teilbereichen 100, 102 maximal von der Ventilbaugruppe 4. Zwischen den genannten Extremstellungen sind beliebige Konturverläufe der Betätigungskontur 67 in den Teilbereichen 100, 102 möglich. Lediglich beispielhaft erfolgt gemäß Fig. 6 ein linearer Anstieg der Betätigungskontur mit Knicken in den Übergangsbereichen zu den Stellungen Stopp, Heben, Senken 103, 105, 107.

Hingegen steigt im Teilbereich 101, welcher mit dem Stößel 74 in Wechselwirkung steht, die Kontur lediglich für die Bewegung in Richtung Heben 104 aus der Stellung 103 an, während die Kontur für die Bewegung 106 in die Stellung Senken 107 eben verläuft. Entsprechend wird für die Bewegung 106 der Stößel 74 nicht in den Figuren nach rechts betätigt, während für die Bewegung 104 in Richtung der Stellung Heben 105 der Stößel 47 in den Figuren nach rechts bewegt wird, so dass das Ventil 20 von der Entlüftungsstellung gemäß Fig. 3 in eine Belüftungsstellung umgeschaltet wird. Auch hier sind zwischen den dargestellten Extrempositionen beliebige Kurvenverläufe denkbar. Es versteht sich, dass die Maxima der Betätigungskontur 67 in den Teilbereichen 100, 101, 102 nicht unbedingt gleiche Beträge aufweisen müssen, wie dies für das Ausführungsbeispiels gemäß Fig. 6 der Fall ist. Vielmehr können diese voneinander abweichen, sofern die Ventile 20, 21 unterschiedliche Stellwege ausführen. Der Einsatz der Kurvenscheibe 64 mit der Kurvenfläche 65 und der in Fig. 6 dargestellten Betätigungskontur 67 hat zur Folge, dass ausgehend von der Stellung Heben 105 eine maximale Verschwenkung in beide Richtungen von jeweils 60° möglich ist. In Verbindung mit den über die Betätigungskontur 67 herbeizuführenden Stellwegen der Ventile 20, 21 folgt hieraus unmittelbar die Steigung der Betätigungskontur 67. Hierbei gilt zu beachten, dass mit einem Anstieg der Steigung der Betätigungskontur 67 die erforderlichen Handbetätigungskräfte für den Benutzer ansteigen können.

Die Betätigungskontur 67 besitzt im Bereich der Teilbereiche 100, 102 mit den Niveaus 121, 122 zwei Maxima, welche mit den Stellungen Heben und Senken korrelieren sowie mit dem Niveau 123 ein Minimum, welches mit der Stellung Stopp korreliert. Hingegen sind für die Betätigungskontur 67 in dem Teilbereich 101 die Niveaus 124, 125 in den Stellungen Stopp sowie Senken gleich und bilden Minima der Betätigungskontur 67, während das Niveau 126 im Bereich der Stellung Heben ein Maximum bildet.

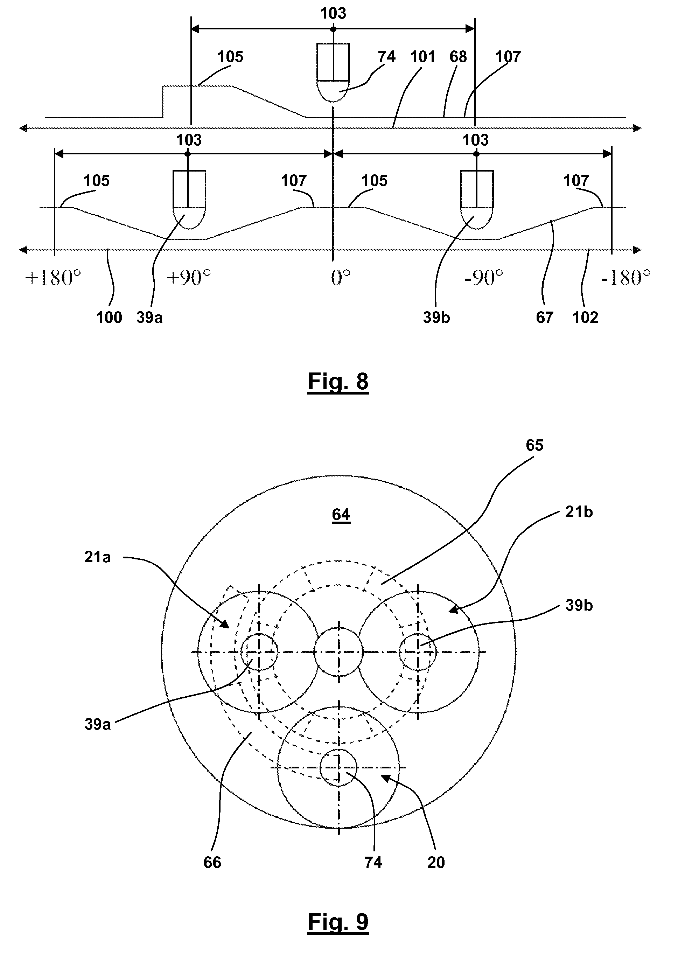

Insbesondere zur Verringerung der maximalen Steigung der Betätigungskontur 67 ist es für eine abgewandelte Ausführungsform gemäß **Fig. 8** und **Fig. 9** ebenfalls möglich, dass anstelle einer einzigen Kurvenfläche 65 zwei radial versetzt zueinander angeordnete Kurvenflächen 65, 66 vorgesehen sind, wobei eine sich über 360° erstreckende Kurvenfläche 65 in Wechselwirkung steht mit den Stößeln 39a, 39b und eine Betätigungskontur 67 bildet, während die andere Kurvenfläche 66 in Wechselwirkdung steht mit dem Stößel 74 und eine weitere Betätigungskontur 68 ausbildet. Somit ist der Teilbereich 101 der Kurvenfläche 66 zugeordnet, während die Teilbereiche 100, 102 der Kurvenfläche 65 zugeordnet sind. Die Kurvenfläche 66 erstreckt sich hierbei über einen Umfangswinkel von ca. 180°. Während sich gemäß Fig. 6 die Teilbereiche 100, 101, 102 lediglich über einen Umfangswinkel von 120° erstrecken, erstrecken sich die Teilbereiche für das Ausführungsbeispiel gemäß Fig. 8 und 9 über einen Umfangsbereich von 180°. Dies hat zur Folge, dass die Bewegungen 104, 106 aus der Stellung Stopp 103 in die Stellung 105 oder Stellung Senken 107 über einen Verschwenkwinkel von jeweils 90° erfolgen. Bei gleichen Hüben der Stößel 74, 39a, 39b und hiermit verbundenen Abständen der Maxima der Betätigungskonturen 67, 68 ergeben sich für das Ausführungsbeispiel gemäß Fig. 8 und 9 gegenüber dem Ausführungsbeispiel gemäß Fig. 6 und 7 verringerte Steigungen der Betätigungskonturen 67; 67, 68. Weiterhin ist Fig. 9 zu entnehmen, dass nicht zwingend die Stößel 39a, 39b, 74 mit zugeordneten Ventilen 20, 21a, 21b gleichförmig in Umfangsrichtung verteilt sein müssen. Vielmehr sind für das Ausführungsbeispiel in Fig. 9 die Stößel 39a, 39b in 3-Uhr-Stellung sowie 9-Uhr-Stellung angeordnet, während der Stößel 74 in der 6-Uhr-Stellung angeordnet ist. Entsprechendes gilt selbstverständlich für die zugeordneten Ventile 20, 21. Vorzugsweise ist die Kurvenfläche, welche eine Betätigungskontur für ein Ventil mit größerem Stellhub besitz als ein Ventil, welches mit einer anderen Kurvenfläche betätigt wird, radial außenliegend von der anderen Kurvenfläche angeordnet. Ebenfalls möglich ist, dass drei radial nebeneinander liegende Kurvenflächen vorgesehen sind, die jeweils für die Betätigung eines Ventil 39a, 39b und74 zuständig sind.

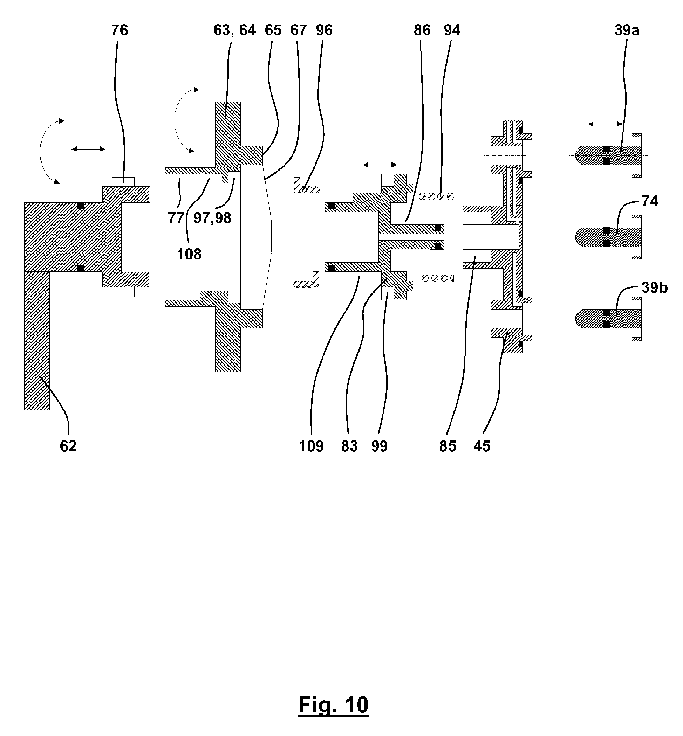

In **Fig. 10** sind Bauelemente der Schaltventileinheit 17 in einer Explosionsdarstellung dargestellt mit den zugeordneten Freiheitsgraden der Bauelemente:
Der Wählhebel 62 ist in eingebautem Zustand sowohl translatorisch verschieblich als auch verschwenkbar um die Längsachse 69-69. Das Betätigungselement 63, nämlich die Kurvenscheibe 64, ist lediglich verschwenkbar um die Längsachse 69-69. Das Verriegelungselement 83 verfügt ausschließlich über einen translatorischen Freiheitsgrad in Richtung der Längsachse 69-69. Die Zwischenwand 45 ist gehäusefest angeordnet. Schließlich sind die Stößel 39a, 39b sowie 74 translatorisch verschieblich in Richtung der Längsachse 69-69 bzw. parallel zu dieser. Weiterhin ist in Fig. 10 zu erkennen, dass die Torsionsfeder 96 in Umfangsrichtung formschlüssige Aufnahme findet in einer Aufnahmenut 108 der Kurvenscheibe 64 sowie einer Aufnahmenut 109 des Verriegelungselements 83.

Die Funktionsweise der erfindungsgemäßen Schaltventileinheit 17 ist wie folgt:

### A) Elektropneumatische Betätigung

Für eine rein elektropneumatische Betätigung verbleibt die manuelle Betätigungseinrichtung 11 in der Grundstellung, welche mit der Stellung gemäß Figuren 6 und 8 korreliert.

### a) Stellung Stopp

Fig. 3 zeigt die pneumatische Stellung Stopp, in welcher die Magnetventile 18, 19 in ihre Entlüftungsstellung geschaltet sind, in welcher die Steuerkammern 48, 48A entlüftet sind, was zur Folge hat, dass die Steuerschieber 31, 31A infolge der Druckfedern 50, 50A in ihren in den Figuren linken Endstellungen sind. Somit schafft das Ventil 20 als einzige pneumatische Verbindung eine Verbindung der Anschlüsse 58, 59, wie dies in Fig. 3 und 5 dargestellt ist, so dass die Verbindungsleitung 53 entlüftet ist. Hingegen nehmen die Ventile 21a, 21b die in Fig. 3 und 4 dargestellte Sperrstellung ein, in welcher die Luftfederbalganschlüsse 3a, 3b abgesperrt sind.

### b) Stellung Heben

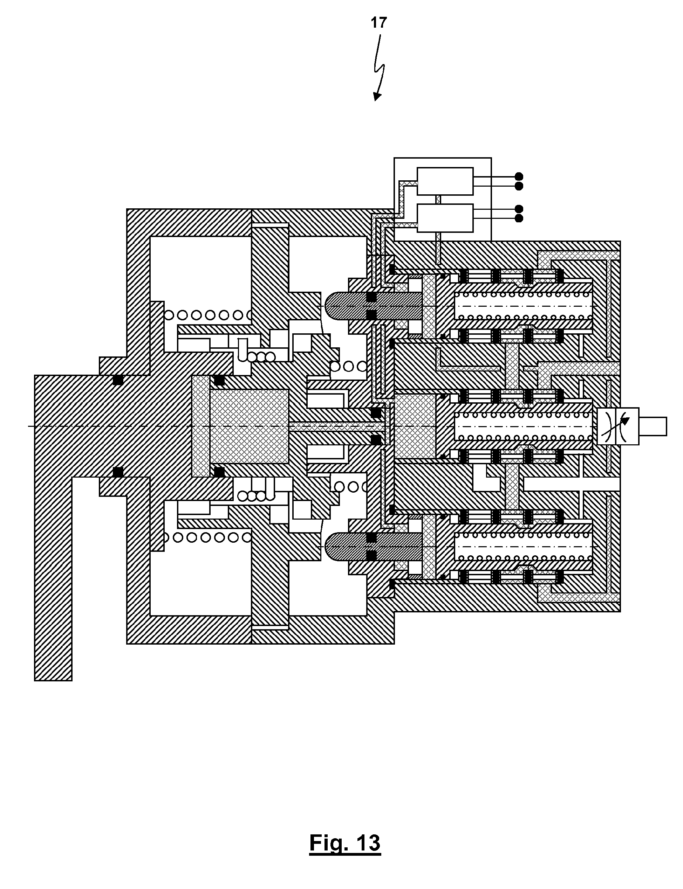

Eine Herbeiführung einer pneumatischen Stellung Heben erfolgt durch Umschaltung der Magnetventile 18, 19 in ihre Belüftungsstellungen, so dass die Steuerkammern 48, 48A pneumatisch beaufschlagt werden, wodurch die Ventile 20, 21 jeweils in ihre rechte Stellung überführt werden, wie dies in Fig. 13 dargestellt ist. Dies hat zur Folge, dass das Ventil 20 die Verbindungsleitung 53 mit dem Versorgungsanschluss 5 verbindet. Weiterhin verbinden die Ventile 21a, 21b die Verbindungsleitung 53 mit den Luftfederbalganschlüssen 3a, 3b, womit letztendlich eine Belüftung der Luftfederbälge erfolgt.

### c) Stellung Senken

Hingegen wird eine Stellung Senken pneumatisch herbeigeführt, indem das Magnetventil 18 in die Entlüftungsstellung geschaltet wird, während das Magnetventil 19 in die Belüftungsstellung geschaltet wird (vgl. Fig. 12). Folglich nimmt das Ventil 20 die linke Stellung ein, in welcher die Verbindungsleitung 53 mit dem Entlüftungsanschluss 7 verbunden ist. Die Ventile 21a, 21b nehmen die rechte Stellung ein, in welcher die Luftfederbalganschlüsse 3a, 3b mit der Verbindungsleitung 53 verbunden sind, so dass eine Entlüftung der Luftfederbälge erfolgen kann.

### d) Steuerungs- oder Regelungsstrategie

Für die vorgenannten pneumatischen Veränderungen der Stellungen der Ventilbaugruppe 4 ermittelt die Steuereinheit geeignete elektrische Signale 10 zur Ansteuerung der Magnetventile 18, 19. Hierbei kann zunächst ein manuell initiiertes Heben und Senken erfolgen, indem der Steuereinheit über einen Taster, Schalter oder Ähnliches ein elektrisches Signal zugeführt wird, welches der Steuereinheit signalisiert, dass ein Wunsch Heben oder Senken besteht. Hierbei kann der Taster, Schalter oder Hebel elektrisch mit der Steuereinheit verbunden sein. Ebenfalls möglich ist, dass eine Fernbedienung, beispielsweise mit einer Funk- oder Infrarotübertragung, Einsatz findet, die mit der Steuereinheit kommuniziert. Weiterhin können Taster oder Fernbedienung im Bereich des Anhängers, der Achsen oder im Bereich des Fahrerhauses des Fahrzeugs angeordnet sein.

Weiterhin kann eine Herbeiführung der Stellungen Heben, Senken und Stopp im Rahmen einer Niveauregelung erfolgen. Erfasst ein Sensor 14 eine Ist-Niveauhöhe, kann im Fall einer Abweichung der Ist-Niveauhöhe von einer Soll-Niveauhöhe die Steuereinheit bedarfsgerecht die Magnetventile 18, 19 ansteuern, so dass ein Heben oder Senken erfolgt. Hierbei kann die Steuereinheit beliebige anderweitige Kriterien auswerten, wie dies eingangs erläutert worden ist, beispielsweise eine Bremsbetätigung berücksichtigen, für welche vorzugsweise keine Niveauregelung gewünscht ist, eine Niveauregelung bei einer Kurvenfahrt vermeiden und Ähnliches.

Während sämtlichen genannten elektro-pneumatischen Betätigungen ändern sich die Stellungen der Ventile 20,21a, 21b, ohne dass es zu Veränderungen der manuellen Betätigungseinrichtung 11 kommt. Vielmehr kann sich für einen Stellweg der Schieber 31, 31A eine Größe eines Spiels in der Übertragungskette zwischen den Betätigungskonturen 67, 68 und den Schiebern 31, 31A verändern.

### B) Manuelle Betätigung

Für eine manuelle Betätigung kann der Benutzer über den Wählhebel 62 auf die erfindungsgemäße Schaltventileinheit 17 einwirken, insbesondere wenn das Fahrzeug oder der Anhänger steht. Vorzugsweise sind hierbei die Magnetventile 18, 19 automatisch durch die Steuereinheit in ihre Entlüftungsstellung geschaltet, was insbesondere stromlos der Fall ist, so dass diese Stellung auch ohne eine elektrische Leistungsversorgung automatisiert eingenommen wird.

### a) Stellung Stopp

In der Neutralstellung oder Ausgangsstellung befindet sich der Wählhebel 62 in der Stellung Stopp 103.

### b) Stellung Heben

Für eine Verschwenkung des Wählhebels 62 erfolgt eine Bewegung 104 der Stößel 39a, 39b, 74 entlang der Betätigungskontur(en) 67 bzw. 67 und 68 bis die Stellung Heben 105 erreicht ist. In dieser Stellung drückt die Betätigungskontur 67 aufgrund der mechanischen Kopplung die Stößel 39a, 39b sowie 74 maximal nach rechts, so dass auch ohne pneumatische Beaufschlagung der Steuerkammern 48, 48A die rechten Stellungen gemäß Fig. 13 der Ventile 20, 21a, 21b eingenommen werden. In der Stellung Heben 105 kann die Feder 99 des Verriegelungselements 83 einrasten in der zugeordneten Nut 97, so dass Wählhebel 62 und Kurvenscheibe 64 auch in der Stellung Heben verbleiben, wenn der Benutzer den Wählhebel 62 loslässt. Es versteht sich, dass für die Gewährleistung einer sogenannten Totmannstellung eine derartige Rastierung entfallen kann, so dass der Wählhebel und die Kurvenscheibe 64 automatisch wieder in die Stellung Stopp zurückkehren, wenn der Benutzer den Wählhebel 62 loslässt.

### c) Stellung Senken

Zur Herbeiführung einer Stellung Senken erfolgt eine Verschwenkung des Wählhebels 62 in die entgegengesetzte Richtung, bis die Stößel 39a, 39b und 74 die Stellung Senken 107 erreicht haben, für welche die Stößel 39a, 39b maximal hereingedrückt sind und sich die Ventile 21a, 21b in ihrem rechten Stellungen befinden, während der Stößel 74 infolge der Federbeaufschlagung maximal aus der Zwischenwand 45 nach außen heraustritt, so dass das Ventil 20 seine linke Stellung einnehmen kann. Es erfolgt eine Entlüftung der Luftfederbälge.

### C) Reset-to-Ride-Funktion

Vergisst der Fahrer in einer verriegelten Stellung Heben oder Senken vor dem Fahrbetrieb eine Rückstellung des Wählhebels 62 durch Hereindrücken des Wählhebels 62, Entriegelung der Verriegelungseinheit 95 und Rückführung des Wählhebels 62 mit Betätigungselement 63 durch die Torsionsfeder 96 zurück in die Stellung Stopp, würde dies bedeuten, dass unabhängig von der Ansteuerung der Magnetventile 18, 19 die Position der Ventile 20, 21 durch die Betätigungskontur beeinflusst oder vorgegeben wird, womit insbesondere eine Niveauregelung durch die Steuereinheit, die Magnetventile 18, 19 und die Ventilbaugruppe 4 unmöglich wäre. Zur Durchführung einer Reset-to-Ride-Funktion wird in diesem Fall das Magnetventil 18 in seine Belüftungsstellung von der Steuereinheit über die elektrischen Signale 10 geschaltet, während das Magnetventil 19 in seine Entlüftungsstellung geschaltet wird. Dies hat eine Belüftung der Druckräume 89, 92 zur Folge (vgl. Fig. 11), die zur Folge hat, dass die Kopplungseinrichtung 95 gelöst wird, indem das Verriegelungselement 83 nach rechts verschoben wird und die Feder 90 außer Eingriff mit der Nut 97, 98 gebracht wird. Somit kann eine Rückstellung des Wählhebels 62 und der Kurvenscheibe 64 über die Torsionsfeder 96 erfolgen.

Für die erfindungsgemäße Schaltventileinheit 17 sind die Längsachsen der Ventile 20, 21 in Schieberbauweise sowie die Bewegungs-Freiheitsgrade derselben parallel zur Schwenkachse sowie dem Verschiebe-Freiheitsgrad des Wählhebels 62 orientiert. Die Betätigungskontur verläuft meanderförmig in Richtung der Schwenkachse des Wählhebels 62 mit Vorsprüngen und Vertiefungen in diese Richtung.

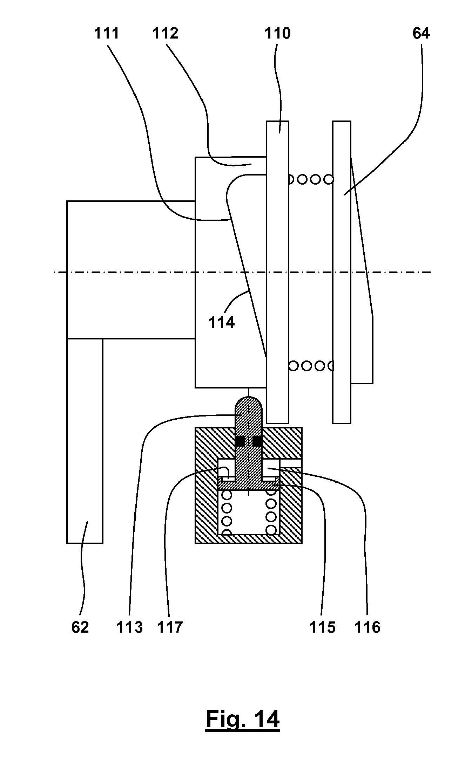

**Fig. 14** zeigt eine alternative Ausgestaltung von Teilen der Schaltventileinheit 17, für welche abweichend zu einer Verriegelung der Stellungen Heben, Senken und/oder Stopp über die Kopplungseinheit 95 eine pneumatische Verriegelungseinheit Einsatz findet. Auch hier ist der Wählhebel 62 drehfest, aber axial verschieblich gekoppelt mit einer Kurvenscheibe 64. Der Wählhebel 62 besitzt eine Verriegelungsscheibe 110, welche eine Verriegelungskontur 111 besitzt. In eine Vertiefung 112 tritt in der Stellung Heben und/oder Senken ein federbeaufschlagter Verriegelungsbolzen 113 ein, nachdem dieser über eine Schräge 114 der Verriegelungskontur 111 mit zunehmender Verschwenkung des Wählhebels 62 vorgespannt worden ist. Der Verriegelungsbolzen 113 ist gekoppelt mit einem Entriegelungskolben 115, welcher eine in einen Druckraum 116 mündende Kolbenfläche 117 besitzt. Der Druckraum 116 ist pneumatisch mit dem Steuerkanal 56 verbunden, so dass bei elektrischer Ansteuerung einer Reset-to-Ride-Funktion durch die Steuereinheit und die Magnetventile 18, 19 wie oben erläutert der Entriegelungskolben 115 mit dem Verriegelungsbolzen entgegen der Beaufschlagung durch die Feder außer Eingriff mit der Verriegelungskontur 111 gebracht wird. Alternativ ist es möglich, den Eingriff zwischen Verriegelungsbolzen 113 und der Verriegelungskontur 111 zu beseitigen, indem der Wählhebel 62 axial in Richtung der Kurvenscheibe 64 gedrückt wird. Somit kann die verriegelte Stellung oder Senken sowohl elektropneumatisch als auch infolge manueller Veranlassung verlassen werden. Ebenfalls möglich ist eine hier nicht dargestellte Entriegelung, bei welcher der Verriegelungsbolzen 113 anstelle über die pneumatische Entriegelung gemäß Fig. 14 über einen von der oder einer Steuereinheit unmittelbar elektrisch betätigten elektromagnetischen Aktuator betätigt wird.

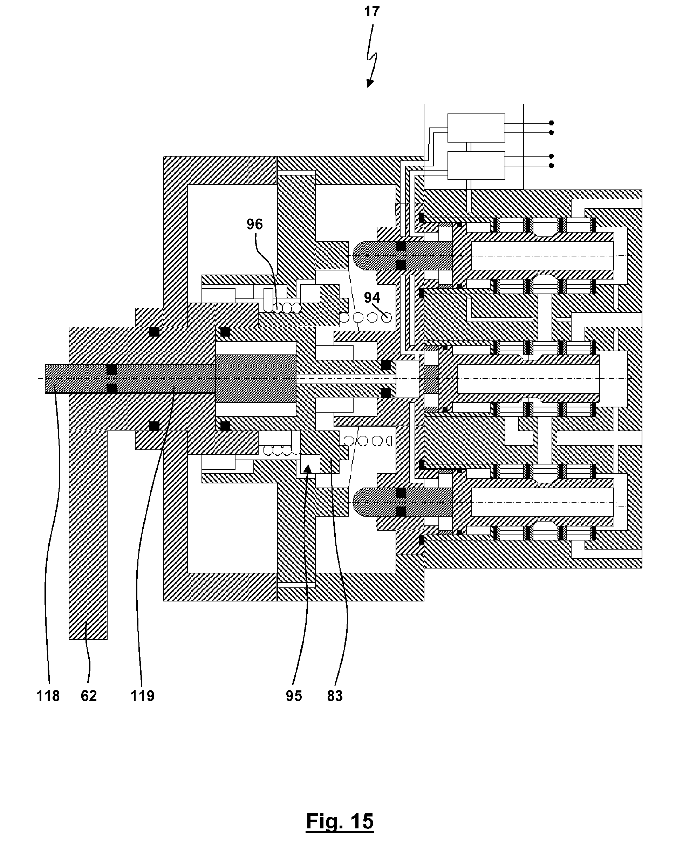

**Fig. 15** zeigt eine abgewandelte Ausführungsform der erfindungsgemäßen Schaltventileinheit 17, bei welcher zur manuellen Entriegelung einer Stellung Heben und/oder Senken nicht der gesamte Wählhebel 62 translatorisch bewegt wird. Vielmehr kann in diesem Fall der Wählhebel 62 lediglich einen Verschwenk-Freiheitsgrad besitzen. Allerdings ist an dem Wählhebel 62 ein Betätigungsknopf 118 vorgesehen, mit dessen Betätigung ein Stößel 119 das Verriegelungselement 83 entgegen der Beaufschlagung durch die Druckfeder 94 in Fig. 15 nach rechts drückt. Kommt auf diese Weise die Kopplungseinheit 95 außer Wirkung, wie dies bereits zuvor erläutert worden ist, kann eine Rückführung von Wählhebel 62 und Kurvenscheibe 64 durch die Torsionsfeder 96 erfolgen.

Vorzugsweise erfolgt eine Ansteuerung der Magnetventile 18, 19 durch eine elektronische Brems-Steuereinheit, so dass diese Steuereinheit multifunktional ausgebildet ist. Andererseits kann es auch vorteilhaft sein, wenn die erfindungsgemäße Schaltventileinheit 17 mit einem separaten Steuergerät ausgebildet ist, so dass ein derartiges Steuergerät mit weiteren Steuereinheiten, beispielsweise einer elektronischen Bremsanlage, welches von anderen Herstellern kommt, kombiniert werden kann.

Durch Einsatz einer Niveauregelung entsprechend der oben dargelegten elektropneumatischen Ansteuerung der Schaltventileinheit 17 und der Ventilbaugruppe 4 kann eine Einstellung einer beliebigen, bedarfsgerechten Niveauhöhe erfolgen mit einer automatischen Anpassung beispielsweise an eine Fahrgeschwindigkeit, den Untergrund, die Beladung und Ähnliches. Weiterhin kann für das durch die erfindungsgemäße Schaltventileinheit 17 gebildete Hebe-Senk-Ventil eine ansonsten erforderliche zusätzliche Stellung Fahrt entfallen, welche üblicherweise durch eine zusätzliche Ebene bzw. eine zusätzlichen Freiheitsgrad realisiert ist. Vielmehr ist für das dargestellte Ausführungsbeispiel erläutert worden, dass sämtliche Stellungen des Betätigungselements über einen einzigen Freiheitsgrad, hier eine Verschwenkung, gewährleistet werden können, wobei lediglich für eine Entriegelung ein weiterer Freiheitsgrad genutzt werden muss.

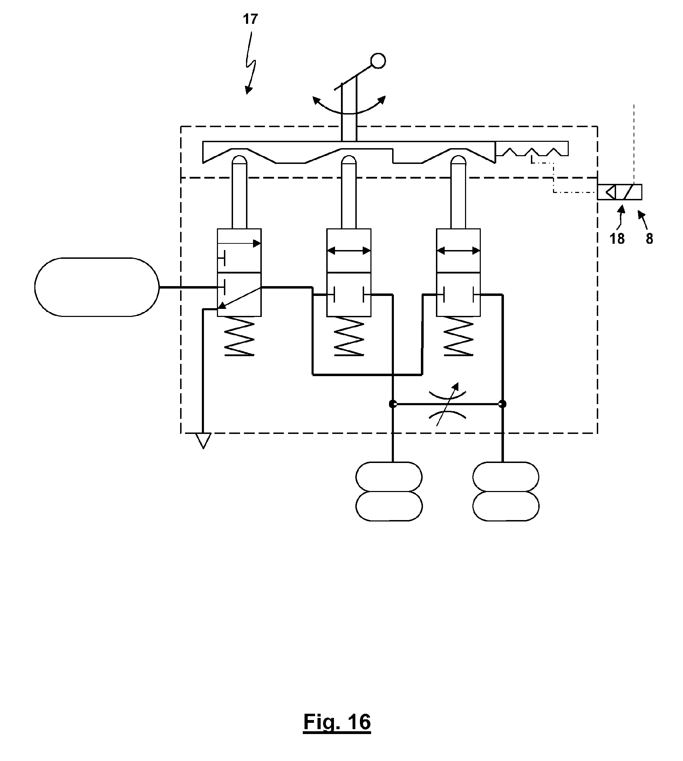

**Fig. 16** zeigt eine Nutzung der Schaltventileinheit 17 gemäß Fig. 2, bei welcher eine elektropneumatische Steuerungsmöglichkeit für die Ventile 20, 21a, 21b nicht gegeben ist. Hierzu ist das Magnetventil 19 gänzlich entfallen und das Magnetventil 18 lediglich zur pneumatischen Ansteuerung der Kopplungseinheit 95 vorgesehen. Somit ist für diesen Einsatzfall die Schaltventileinheit 17 lediglich manuell zu betätigen in Form eines Hebe-Senk-Ventils mit einer Funktion, welche ähnlich der Funktion des in den Patenten DE 41 20 824 C1 sowie DE 42 02 729 C2 beschriebenen Hebe-Senk-Ventils ist. Über die reduziert ausgebildete elektrisch ansteuerbare Betätigungseinheit 8 erfolgt in diesem Fall keine Niveauregelung. Durchaus möglich ist allerdings auch, dass in den Versorgungsleitungen für die Luftfederbälge 2a, 2b in an sich bekannter Weise ein elektrisch, pneumatisch oder mechanisch geregeltes Niveauregelventil vorgesehen ist (welches in Fig. 16 nicht dargestellt ist). Wie die Fig. 2 und 16 zeigen, können die beiden Schaltventileinheiten 17 gemäß Fig. 2 und 16, die - im Wesentlichen bis auf den Entfall des Magnetventils 18 und ggf. einen Verschluss der Steuerkanäle 49, 49A identisch oder mit einem hohen Anteil von Gleichteilen ausgestattet sind - für völlig unterschiedliche Fahrzeuge oder Anhänger Einsatz finden: Die Schaltventileinheit gemäß Fig. 2 findet Einsatz insbesondere für ein Fahrzeug mit einer elektronischen Steuereinheit, welche in der Schaltventileinheit 17 eine Niveauregelung durchführt. Hingegen kann die Schaltventileinheit 17 gemäß Fig. 16 Einsatz finden in Verbindung mit Fahrzeugen und Anhängern, wie diese in der Vergangenheit vermehrt betrieben worden sind und auch zukünftig bei verringerten Anforderungen noch eingesetzt werden, nämlich Fahrzeugen oder Anhängern, bei welchen ein manuell betätigbares Hebe-Senk-Ventil gewünscht ist mit Reset-to-Ride-Funktion. Eine Anpassung an die beiden genannten unterschiedlichen Einsatzfälle erfolgt vorzugsweise durch Anpassung der elektrisch ansteuerbaren Betätigungseinheit 8, beispielsweise den Entfall des Magnetventils 19.

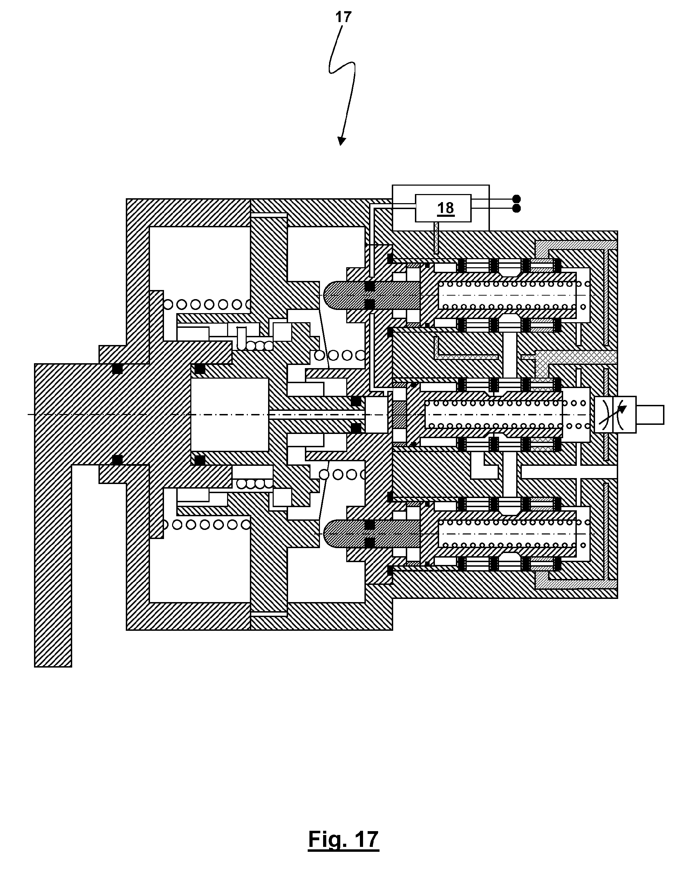

**Fig. 17** zeigt eine Nutzung einer Schaltventileinheit gemäß Fig. 3 bis 15 unter Modifikation derart, dass diese ähnlich zu Fig. 16 als rein manuell betätigbares Hebe-Senk-Ventil mit elektropneumatischer Reset-to-Ride-Funktion eingesetzt ist. In diesem Fall erfolgt keine pneumatische Ansteuerung der Ventile 21a, 21b, so dass das Magnetventil 19 entfallen ist. Für eine derartige Einsatzform kann die erfindungsgemäße Schaltventileinheit 17 mit einem hohen Anteil an gleichen Bauteilen zu der Schaltventileinheit 17 gemäß Fig. 3 bis 15 ausgebildet sein. Eine bis auf die elektrische Betätigungseinheit 8 identisch ausgebildete Schaltventileinheit 17 kann für die beiden Einsatzfälle gemäß Fig. 3 bis 15 sowie Fig. 17 ermöglicht werden, wenn - abweichend zu Fig. 17 - auch für die Nutzung gemäß Fig. 17 die Steuerkanäle 49 für die Steuerkammern 48 der Ventile 21a, 21b vorgesehen sind, diese aber in einem ständig entlüfteten Zustand gehalten werden. Für die beiden unterschiedlichen Nutzungsformen der Schaltventileinheiten 17 ist es von Vorteil, wenn entsprechend den dargestellten Ausführungsbeispielen die elektrische Betätigungseinheit 8 mit den Magnetventilen 18, 19 von außen an das Gehäuse 22 angeflanscht ist.

Eine Druckluftversorgung der Magnetventile 18, 19 erfolgt vorzugsweise durch einen Anschluss der elektrischen Betätigungseinheit 8, der pneumatisch gekoppelt ist mit dem Versorgungsanschluss durch eine durch das Gehäuse 22 hindurch geführte Leitung, wie dies in Fig. 3 zu erkennen ist.

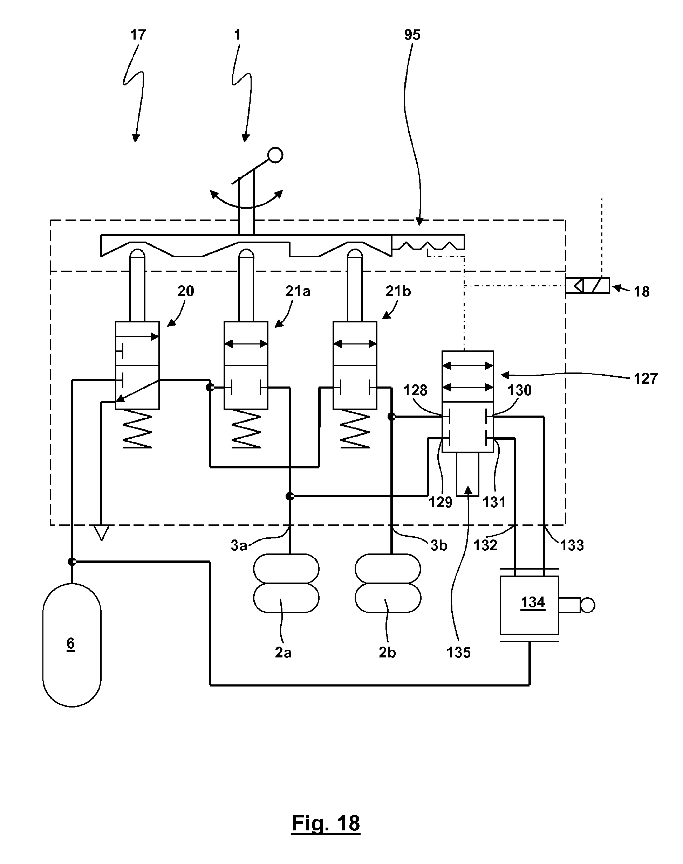

In der Ausführungsform gemäß Figur 18 ist in die Schaltventileinheit 17 zusätzlich zu den Bauelementen gemäß Figur 16 ein Sperrventil 127 integriert, welches für die dargestellte zweikreisige Ausgestaltung der Luftfederungsanlage 1 als 4/2-Wege-Ventil ausgebildet ist. In Figur 18 ist gegenüber Figur 2 der Verbindungskanal 60 mit dem Magnetventil 61 entfallen. Die mit den Luftfederbalganschlüssen 3a, 3b gekoppelten Ausgänge der Ventile 21a, 21b sind jeweils mit einem Ausgang 128, 129 des Sperrventils 127 verbunden, während die Eingänge 130, 131 des Sperrventils 127 mit Anschlüssen 132, 133 der Schaltventileinheit 17 verbunden sind, die außerhalb der Schaltventileinheit 17 mit einem Niveauregelventil 134 verbunden sind, über welches die Anschlüsse 132, 133 je nach Niveau wahlweise mit dem Vorratsbehälter 6 und einer Entlüftung verbindbar sind. In der in Figur 18 nicht wirksamen Durchlassstellung des Sperrventils 127 kann somit über das Niveauregelventil 134 eine gemeinsame Be- und Entlüftung der Luftfederbälge 2a, 2b beider Kreise erfolgen. Hingegen ist in der in Figur 18 wirksamen Sperrstellung des Sperrventils 127 das Niveauregelventil 134 wirkungslos, sodass der Zustand der Luftfederventile 2a, 2b unverändert bleibt oder durch manuelle Betätigung des Wählhebels 62 mit Betätigungselement 63 unter Nutzung der Ventile 20, 21a, 21b eine manuelle Be- und Entlüftung der Luftfederbälge 2a, 2b zum Heben und Senken erfolgen kann. Über das Magnetventil 18 oder ein elektrisch vorgesteuertes Vorsteuerventil kann beispielsweise mit Übergang zu einem Fahrbetrieb eine Ansteuerung des Sperrventils 17 in die Durchlassstellung erfolgen, sodass eine Reset-to-Ride-Funktion gewährleistet ist. Über eine gemeinsame pneumatische Steuerleitung kann ebenfalls eine Beaufschlagung der Kopplungseinheit 95 erfolgen. Weiterhin ist für das dargestellte Ausführungsbeispiel das Sperrventil 127 über eine Betätigungseinrichtung umschaltbar von der Durchlassstellung in die Sperrstellung für eine manuelle Bedienung zum Heben und Senken durch manuelle Betätigung des Wählhebels 62. Hierbei kann die Betätigungseinrichtung in Form eines manuellen Betätigungsknopfes, Hebels oder Tasters ausgebildet sein. Ebenfalls möglich ist die pneumatische oder elektrische Betätigung nach manueller Betätigung eines Betätigungselements mit hiermit einhergehender Erzeugung eines pneumatischen oder elektrischen Betätigungssignals.

### BEZUGSZEICHENLISTE

- 1: Luftfederungsanlage
- 2: Luftfederbalg
- 3: Luftfederbalganschluss
- 4: Ventilbaugruppe
- 5: Versorgungsanschluss
- 6: Vorratsbehälter
- 7: Entlüftungsanschluss
- 8: elektrische Betätigungseinheit
- 9: Steuereinheit
- 10: elektrisches Signal
- 11: manuelle Betätigungseinrichtung
- 12: mechanische Kopplung
- 13: elektrisches Signal
- 14: Sensor
- 15: elektrisches Signal
- 16: Sensor
- 17: Schaltventileinheit
- 18: Magnetventil
- 19: Magnetventil
- 20: Ventil
- 21: Ventil
- 22: Gehäuse
- 23: Absatz
- 24: Sacklochbohrung
- 25: Steuerkanten-Einheit
- 26: Dichtelement
- 27: Dichtelement
- 28: Dichtelement
- 29: Dichtelement
- 30: Führungskäfig

- 31: Schieber
- 32: Steuernut
- 33: Boden
- 34: Kolben
- 35: Kolbenfläche
- 36: Hülse
- 37: Längsachse
- 38: Dichtring
- 39: Stößel
- 40: Stirnfläche
- 41: Mantelfläche
- 42: Umfangsnut
- 43: Dichtring
- 44: Distanzhülse
- 45: Zwischenwand
- 46: Bohrung
- 47: Bund
- 48: Steuerkammer
- 49: Steuerkanal
- 50: Druckfeder
- 51: Anschluss
- 52: Anschluss
- 53: Verbindungsleitung
- 54: Entlüftungsbohrung
- 55: Distanzelement
- 56: Steuerkanal
- 57: Anschluss
- 58: Anschluss
- 59: Anschluss
- 60: Verbindungskanal
- 61: Magnetventil
- 62: Wählhebel
- 63: Betätigungselement
- 64: Kurvenscheibe
- 65: Kurvenfläche
- 66: Kurvenfläche
- 67: Betätigungskontur
- 68: Betätigungskontur
- 69: Längsachse
- 70: Führungsnut
- 71: Querschnittserweiterung
- 72: Absatz
- 73: Deckel
- 74: Stößel
- 75: Kopplungseinheit
- 76: Feder
- 77: Nut
- 78: Druckfeder
- 79: Innenraum
- 80: Bohrung
- 81: Dichtelement
- 82: Bund
- 83: Verriegelungselement
- 84: Kopplungseinheit
- 85: Nut
- 86: Feder
- 87: Sacklochbohrung
- 88: Fortsatz
- 89: Druckraum
- 90: Sacklochbohrung
- 91: Kolbenbereich
- 92: zweiter Druckraum
- 93: Längsbohrung

- 94: Druckfeder
- 95: Kopplungseinheit
- 96: Torsionsfeder
- 97: Nut
- 98: Nut
- 99: Feder
- 100: Teilbereich
- 101: Teilbereich
- 102: Teilbereich
- 103: Stellung Stopp
- 104: Bewegung Stopp-Heben
- 105: Stellung Heben
- 106: Bewegung Stopp-Senken
- 107: Stellung Senken
- 108: Aufnahmenut
- 109: Aufnahmenut
- 110: Verriegelungsscheibe
- 111: Verriegelungskontur
- 112: Vertiefung
- 113: Verriegelungsbolzen
- 114: Schräge
- 115: Entriegelungskolben
- 116: Druckraum
- 117: Kolbenfläche
- 118: Betätigungsknopf
- 119: Stößel
- 120: Dichtelement
- 121: Niveau
- 122: Niveau
- 123: Niveau
- 124: Niveau
- 125: Niveau
- 126: Niveau
- 127: Sperrventil
- 128: Ausgang
- 129: Ausgang
- 130: Eingang
- 131: Eingang
- 132: Anschluss
- 133: Anschluss
- 134: Niveauregelventil
- 135: Betätigungseinrichtung

## Patentansprüche

1. Schaltventileinheit (17) zum Be- und Entlüften von Luftfederbälgen (2) zum Heben und Senken eines Aufbaus eines Fahrzeugs oder Anhängers mit
a) einer Ventilbaugruppe (4), über die
aa) in einer Stellung Heben der Ventilbaugruppe (4) ein Luftfederbalganschluss (3)
mit einem Versorgungsanschluss (5) verbindbar ist,
ab) in einer Stellung Stopp der Ventilbaugruppe (4) ein Luftfederbalganschluss (3)
abgesperrt ist sowie
ac) in einer Stellung Senken der Ventilbaugruppe (4) ein Luftfederbalganschluss (3)
mit einem Entlüftungsanschluss (7) verbindbar ist, und
b) einer manuellen Betätigungseinrichtung (11), die mechanisch mit der Ventilbaugruppe (4) gekoppelt ist, so dass durch manuelle Betätigung der Betätigungseinrichtung (11) die Ventilbaugruppe (4) in die Stellung Heben, Senken und/oder Stopp überführbar ist,
**dadurch gekennzeichnet, dass**
die manuelle Betätigungseinrichtung (11) eine manuell um eine Schwenkachse verschwenkbare Kurvenscheibe (64) aufweist, die eine Kurvenfläche (65) besitzt, entlang welcher mit einer Verschwenkung mindestens ein translatorisch und parallel zur Schwenkachse der Kurvenscheibe (64) geführter Stößel (39; 74) bewegt wird, der die Ventilbaugruppe (4) in die Stellung Heben, Senken und/oder Stopp überführt.

2. Schaltventileinheit (17) nach Anspruch 1, **dadurch gekennzeichnet, dass**
a) der oder ein entlang der Kurvenfläche (65) geführter Stößel (74) mit einem eine Be- und Entlüftung gewährleistenden Ventil (20) gekoppelt ist und
b) eine Betätigungskontur (67) der Kurvenfläche (65)
ba) gleiche Niveaus (124, 125) in der Stellung Stopp sowie einer der Stellungen
Heben und Senken sowie
bb) ein abweichendes Niveau (126) in der anderen der Stellungen Heben und
Senken
besitzt.

3. Schaltventileinheit (17) nach Anspruch 1 oder 2, **dadurch gekennzeichnet, dass**
a) der oder ein entlang der Kurvenfläche (65) geführter Stößel (39) mit einem eine Sperrstellung sowie eine Durchlassstellung besitzenden Ventil (21) gekoppelt ist und
b) eine Betätigungskontur (67) der Kurvenfläche (65) ein erstes Niveau (123) in der Stellung Stopp sowie mindestens ein von dem ersten Niveau (123) abweichendes zweites Niveau (121, 122) in den Stellungen Heben und Senken besitzt.

4. Schaltventileinheit (17) nach einem der vorhergehenden Ansprüche, **dadurch gekennzeichnet, dass** an der Kurvenscheibe (64) mehrere Kurvenflächen (65, 66) radial nebeneinanderliegend angeordnet sind, die jeweils mit einem Stößel (39a, 39b; 74) in Wechselwirkung stehen.

5. Schaltventileinheit (17) nach einem der vorhergehenden Ansprüche, **dadurch gekennzeichnet, dass** eine elektrisch ansteuerbare Betätigungseinheit (8) vorgesehen ist, über die in Abhängigkeit eines elektrischen Signals (10) die Ventilbaugruppe (4) in die Stellung Heben, Senken und/oder Stopp überführbar ist, so dass die Ventilbaugruppe (4) sowohl durch die elektrisch ansteuerbare Betätigungseinheit (8) als auch durch die manuelle Betätigungseinrichtung (11) in die Stellungen Heben, Senken und/oder Stopp überführbar ist.

6. Schaltventileinheit (17) nach Anspruch 5, **dadurch gekennzeichnet, dass** die elektrisch ansteuerbare Betätigungseinheit (8) während des Fahrbetriebes durch Überführung der Ventilbaugruppe (4) in die Stellungen Heben, Senken und/oder Stopp eine Niveauregelung ausführt.

7. Schaltventileinheit (17) nach Anspruch 5 oder 6, **dadurch gekennzeichnet, dass** die elektrisch ansteuerbare Betätigungseinheit (8) mit mindestens einem Magnetventil (18, 19) ausgebildet ist, über welches eine pneumatische Beaufschlagung der Ventilbaugruppe (4) steuerbar ist, über welche die Ventilbaugruppe (4) in die Stellung Heben, Senken und/oder Stopp überführbar ist.

8. Schaltventileinheit (17) nach einem der vorhergehenden Ansprüche, **dadurch gekennzeichnet, dass** die Ventilbaugruppe (4) mit mindestens einem Schieber (31, 31A) ausgebildet ist, welcher zwischen Stellungen Heben, Senken und/oder Stopp verschiebbar ist.

9. Schaltventileinheit (17) nach Anspruch 8, **dadurch gekennzeichnet, dass** die Ventilbaugruppe (4) mit
a) mindestens einem ersten Schieber (31), welcher
aa) in einer Stellung den Luftfederbalganschluss (3) mit einer Verbindungsleitung (53) verbindet und
ab) in einer anderen Stellung den Luftfederbalganschluss (3) gegenüber der
Verbindungsleitung (53) absperrt,
b) mit einem zweiten Schieber (31A), welcher
aa) in einer Stellung den Entlüftungsanschluss (7) mit der Verbindungsleitung (53)
verbindet und
ab) in einer anderen Stellung den Versorgungsanschluss (5) mit der
Verbindungsleitung (53) verbindet,
ausgebildet ist.

10. Schaltventileinheit nach Anspruch 8 oder 9, **dadurch gekennzeichnet, dass** der oder mindestens ein Schieber (31, 31A) mit dem Stößel (39a, 39b, 74) gekoppelt ist oder als integrales Bauelement mit dem Stößel ausgebildet ist.

11. Schaltventileinheit (17) nach einem der Ansprüche 8 bis 10, **dadurch gekennzeichnet, dass** die elektrisch ansteuerbare Betätigungseinheit (8) mit zwei Magnetventilen (18, 19) ausgebildet ist, über welche jeweils ein Schieber (31; 31A) pneumatisch verschoben werden kann.

12. Schaltventileinheit (17) nach einem der Ansprüche 8 bis 11, **dadurch gekennzeichnet, dass** eine Betätigung der manuellen Betätigungseinrichtung (11) eine Axialkraft auf den oder die Schieber (31, 31A) aufbringt.

13. Schaltventileinheit (17) nach einem der vorhergehenden Ansprüche, **dadurch gekennzeichnet, dass** die manuelle Betätigungseinrichtung (11) in der Stellung Heben und/oder Senken über eine Kopplungseinheit (95) verrastbar oder verriegelbar ist.

14. Schaltventileinheit (17) nach einem der vorhergehenden Ansprüche, **dadurch gekennzeichnet, dass** die elektrische Betätigungseinheit (8) geeignet ausgebildet ist, um in Abhängigkeit von Betriebs- und/oder Umgebungsparametern eine automatische Rückführung der Ventilbaugruppe (4) in die Stellung Stopp zu verursachen.

15. Schaltventileinheit (17) nach einem der vorhergehenden Ansprüche, **dadurch gekennzeichnet, dass** die elektrische Betätigungseinheit (8) geeignet ausgebildet ist, um in Abhängigkeit von Betriebs- und/oder Umgebungsparametern eine automatische Rückführung der manuellen Betätigungseinrichtung (11) in die Stellung Stopp zu verursachen.

16. Schaltventileinheit (17) nach einem der vorhergehenden Ansprüche, **dadurch gekennzeichnet, dass** die manuelle Betätigungseinrichtung (11) und die elektrische Betätigungseinheit (8) mit einem gemeinsamen Gehäuse (22) ausgebildet sind, in dem eine Zwischenwand (45) angeordnet ist, welche wesentliche Komponenten der manuellen Betätigungseinrichtung (11) und der elektrischen Betätigungseinheit (8) und/oder der Ventilbaugruppe (4) trennt und durch welche mindestens ein mechanisches Kopplungselement (12; Stößel 39a, 39b, 74) hindurchtritt.

17. Schaltventileinheit (17) nach einem der vorhergehenden Ansprüche, **dadurch gekennzeichnet, dass** in einer Stellung Heben oder Senken ein Verriegelungselement (Kopplungseinheit 95; Verriegelungsbolzen 113) für das Betätigungselement (63) durch durch die elektrische Betätigungseinheit (8) verursachte pneumatische Beaufschlagung aus einer verriegelten Stellung in eine entriegelte Stellung überführbar ist und eine Rückstellfeder (Torsionsfeder 96) vorgesehen ist, welche das Betätigungselement (63) für entriegelte Stellung des Verriegelungselements (Kopplungseinheit 95; Verriegelungsbolzen 113) aus der Stellung Heben oder Senken in die Stellung Stopp überführt.

18. Schaltventileinheit (17) nach einem der vorhergehenden Ansprüche, **dadurch gekennzeichnet, dass** ein Handbetätigungsorgan (Wählhebel 62) verschwenkbar ist zwischen Stellungen Heben, Senken und Stopp.

19. Schaltventileinheit (17) nach Anspruch 18, **dadurch gekennzeichnet, dass**
a) das Handbetätigungsorgan (Wählhebel 62) translatorisch verschieblich ist und
b) über eine translatorische Verschiebung des Handbetätigungsorgans (Wählhebel 62) das Verriegelungselement (Kopplungseinheit 95; Verriegelungsbolzen 113) von der verriegelten Stellung in die entriegelte Stellung überführbar ist.

20. Schaltventileinheit (17) nach Anspruch 18, **dadurch gekennzeichnet, dass**
a) das Handbetätigungsorgan (Wählhebel 62) ein Löseelement (Betätigungsknopf 118) besitzt, welches translatorisch verschieblich gegenüber dem Handbetätigungsorgan (Wählhebel 62) gelagert ist, und
b) über eine translatorische Verschiebung des Löseelements das Verriegelungselement von der verriegelten Stellung in die entriegelte Stellung überführbar ist.

21. Schaltventileinheit (17) nach einem der vorhergehenden Ansprüche, **dadurch gekennzeichnet, dass** die elektrische Betätigungseinheit (8) über ein manuelles Bedienelement ansteuerbar ist.

22. Schaltventileinheit nach Anspruch 19, **dadurch gekennzeichnet, dass** das manuelle Bedienelement als Fernbedienung ausgebildet ist.
